# EUROPÄISCHE PATENTSCHRIFT

(11) **EP 3 582 963 B1**
(45) Veröffentlichungstag und Bekanntmachung des Hinweises auf die Patenterteilung: **16.12.2020**
(21) Anmeldenummer: 18719509.4
(22) Anmeldetag: 18.04.2018
(51) Int. Cl.: B32B 5/02, B32B 27/06, B32B 27/08, B32B 27/12, B32B 27/30, B32B 27/32, B32B 27/36, B32B 27/40, E04D 12/00

(54) **NAGELDICHTE UNTERDACHBAHN**
NAIL SEALABLE ROOFING UNDERLAY
MEMBRANE DE SOUS-TOITURE ÉTANCHE À LA PERFORATION DES CLOUS

(30) Priorität: 08.05.2017 DE 102017004350
(43) Veröffentlichungstag der Anmeldung: 25.12.2019
(73) Patentinhaber: Ewald Dörken AG, 58313 Herdecke (DE)
(72) Erfinder: FLAIG, Ronald, 51373 Leverkusen NRW (DE); BACHON, Thomas, 40597 Düsseldorf NRW (DE)
(74) Vertreter: Weidener, Jörg Michael
(86) Internationale Anmeldenummer: PCT/EP2018/059827
(87) Internationale Veröffentlichungsnummer: WO 2018/206247

(56) Entgegenhaltungen:
- EP-A1- 2 279 860
- WO-A1-2015/126931
- WO-A1-2016/178866
- DE-A1-102010 018 810
- JP-A- 2003 221 792
- US-A1- 2012 094 067

## Beschreibung

Die vorliegende Erfindung betrifft ein Verfahren zur Herstellung einer nageldichten Unterdachbahn, wobei die Unterdachbahn eine wenigstens einlagige, insbesondere der Bewitterungsseite zugewandte, Oberschicht und einen nageldichten, wenigstens zweilagigen Schichtaufbau aufweist.

Des Weiteren kann eine Unterdachbahn nach dem vorgenannten Verfahren hergestellt werden. Im Übrigen ist die Unterdachbahn vorgesehen zur Verwendung als Unterspannbahn und/oder Unterdeckbahn und/oder als Wandabdeckung und/oder als Fassadenabdeckung, insbesondere zur Abdichtung.

Bahnware und Folienprodukte müssen in verschiedenen Anwendungen an Untergründen befestigt werden. Im Baubereich betrifft dies z. B. Bahnen, die für die Abdichtung (Luft- und Wasserdichtigkeit) der Gebäudehülle eingesetzt werden (z. B. Dichtungsbahnen, Fassadenbahnen, Luft- und Dampfsperren, Unterdeckbahnen). Soweit möglich, werden derartige Bahnen häufig am Untergrund mechanisch befestigt, z. B. durch Tackern, Nageln, Schrauben und/oder Anschießen. Dabei werden die Bahnen in der Regel derart perforiert, dass die Dichtfunktion an der Perforationsstelle nicht mehr erhalten bleibt.

Aus der Praxis ist ein nachträgliches manuelles und aufwändiges Abdichten mittels Dichtmassen, Dichtbändern oder Klebebändern bekannt. Des Weiteren ist es ebenfalls bekannt, bei der Durchnagelung von Konterlatten ein zwischengelegtes Schaumband, insbesondere ein Nageldichtband, zu verwenden.

Die vorgenannte nachträgliche Abdichtung ist insofern nachteilig, als dass damit ein erheblicher Zusatzaufwand verbunden ist. Außerdem besteht die Gefahr, dass nicht erkannte Perforationen und Beschädigungen weiterhin Undichtigkeiten verursachen.

Im Übrigen sind darüber hinaus auch verschiedene nageldichte Unterdachbahnen aus dem Stand der Technik bekannt. Die Herstellung derartiger nageldichter Unterdachbahnen erfolgt üblicherweise in einem Inline-Herstellungsprozess, bei dem die einzelnen Bahnen zusammengeführt und miteinander verbunden werden. Nachteilig ist hierbei, dass für verschiedene Formen von Unterdachbahnen eine entsprechende Vielzahl an unterschiedlichen Bahnentypen vorgehalten werden müssen. Dies birgt hohe Herstellungskosten und erfordert eine hohe Lagerkapazität.

Die JP 2003-221792 A betrifft ein Verfahren zur Herstellung einer nageldichten Unterdachbahn, wobei eine mikroporöse Schicht mit einer porösen Schicht verbunden wird.

Die US 2012/094067 A1 betrifft eine feuchtevariable und wasserdichte bzw. wasserabweisende Bahn, die aus verschiedenen Schichten ausgebaut ist. Durch eine poröse Schicht kann die Nageldichtigkeit für die vorgenannte Bahn bereitgestellt werden.

Die WO 2015/126931 A1 betrifft eine Bahn, die aufgerollt ist und zwei Oberflächen aufweist, wobei die Bahn insgesamt nageldicht ausgebildet ist.

Die WO 2016/178866 A1 betrifft eine zusammengesetzte isolierende Wandummantelung.

Die DE 10 2010 018810 A1 betrifft eine Bahn mit einem flächigen Bahnkörper, wobei im Bahnkörper ein Material enthalten ist, das im Falle einer Perforation des Bahnkörpers aus dem Bahnkörper zum Verschluss und/oder zur Abdichtung der Perforations-Öffnung selbsttätig austritt und/oder quillt.

Aufgabe der vorliegenden Erfindung ist es nun, die Nachteile des Standes der Technik zu vermeiden. Insbesondere ist es Aufgabe der vorliegenden Erfindung möglichst einfach verschiedenste Ausführungsformen nageldichter Unterdachbahnen bereitzustellen.

Die vorgenannte Aufgabe ist bei einem Verfahren der eingangs genannten Art erfindungsgemäß zumindest im Wesentlichen dadurch gelöst, dass die Oberschicht räumlich und zeitlich getrennt von dem nageldichten Schichtaufbau hergestellt wird und dass die Oberschicht mit dem wenigstens zweilagigen Schichtaufbau, insbesondere fest und/oder stoffschlüssig, verbunden wird.

Erfindungsgemäß ist vorgesehen, dass der Schichtaufbau vor der Herstellung der Unterdachbahn zwischengelagert wird. Vorzugsweise erfolgt die Zwischenlagerung in einem aufgerollten Zustand des Schichtaufbaus, insbesondere in Rollenform. Die Begrifflichkeit "Nageldichtigkeit" charakterisiert, dass, wenn die Unterdachbahn von einem Befestigungsmittel durchdrungen wird, die Wasserdichtigkeit der Unterdachbahn erhalten bleibt. Dabei wird das Befestigungsmittel vom Material des Schichtaufbaus eng umschlossen und der Bereich um das Befestigungsmittel wird wasserdicht abgedichtet, vorzugsweise bis zu Wassersäulen von über 200 mm, insbesondere im Bereich von 800 bis 1700 mm.

Durch die Bereitstellung des nageldichten Schichtaufbaus und somit der nageldichten Unterdachbahn kann die Wasserdichtigkeit stets garantiert werden, auch wenn die Unterdachbahn starken Beanspruchungen, die insbesondere Perforationen der Unterdachbahn bedingen können, ausgesetzt ist.

Die Trennung der Herstellung der Oberschicht und des nageldichten Schichtaufbaus bietet erfindungsgemäß diverse Vorteile, wobei für die Unterdachbahn stets die Nageldichtheit gewährleistet werden kann.

Es ist keine Inline-Fertigung zur Herstellung der nageldichten Unterdachbahn vorgesehen. Die Oberschicht kann verschiedene Schichtaufbauten bzw. eine Mehrzahl von Lagen aufweisen, wobei vorgesehen sein kann, dass die Oberschicht auch ohne den nageldichten Schichtaufbau als nicht-nageldichte Unterdachbahn verwendet werden kann. Der erst später im Rahmen der Herstellung an die Oberschicht anzubringende Schichtaufbau gewährleistet für die Oberschicht die Nageldichtheit, ohne dass die Funktionen der Oberschicht dadurch notwendigerweise eingeschränkt werden. Dabei versteht es sich, dass die getrennte Herstellung der Oberschicht von dem Schichtaufbau räumlich und zeitlich so weit getrennt werden kann, dass eine Fertigung in unterschiedlichen Werken bzw. an unterschiedlichen Produktionsstandorten durchgeführt werden kann.

Im Übrigen bedeutet die zeitliche Trennung, dass nicht nur keine Inline-Fertigung stattfindet, sondern dass auch die Herstellung der Unterdachbahn zeitlich unabhängig von der Herstellung der Oberschicht und/oder des Schichtaufbaus vorgesehen sein kann, so dass sich verringerte Lagerkosten für die verschiedenen Formen der Unterdachbahnen ergeben.

Darüber hinaus wird auch die Lagerkapazität gesenkt, da die Oberschicht unabhängig von dem Schichtaufbau für den Handel bereitgestellt werden kann, wobei die zusätzliche Funktion der Nageldichtigkeit durch den Schichtaufbau, der insbesondere unabhängig von der Oberschicht hergestellt wird, gewährleistet werden kann. Dabei können verschiedene Unterdachbahnen durch eine Variation der Oberschicht hergestellt werden. Produziert ein Hersteller beispielsweise fünf nageldichte und fünf nicht-nageldichte Unterdachbahnen, so müssen letztlich Fertigungsmöglichkeiten und Lagerkapazitäten für zehn unterschiedliche Bahnentypen bestehen. Erfindungsgemäß müssen lediglich sechs unterschiedliche Typen vorgehalten werden, nämlich die fünf nicht-nageldichten Bahnentypen als Oberschicht und der nageldichte Schichtaufbau, der bedarfsweise mit den einzelnen Bahnen zur Herstellung nageldichter Unterdachbahnen verbunden wird.

Folglich ist durch die erfindungsgemäße Verfahrensausgestaltung ein Produktionsablauf gegeben, der deutlich einfacher verschiedene nageldichte Unterdachbahnen bereitstellen kann. Es wird kein aufwändiger Umbau der Produktionsanlage erforderlich, wenn unterschiedlichste Unterdachbahnen, die sich durch verschiedene Funktionalitäten bzw. Lagen der Oberschicht unterscheiden, hergestellt werden.

Es ergibt sich durch die Erfindung letztlich eine Senkung der Produktions- und Lagerkosten. Darüber hinaus werden die Anlagekosten reduziert, da keine eigene Fertigungslinie für jeweils eine einzelne Ausführungsform der Unterdachbahn vorgesehen ist. Zudem ergibt sich eine hohe Individualisierbarkeit und Flexibilisierung bei der Herstellung der Unterdachbahnen, da durch die Vorhaltung des wenigstens zweilagigen, nageldichten Schichtaufbaus an unterschiedlichsten Oberschichten jeweils die Zusatzapplikation bzw. Zusatzfunktionalität der Nageldichtigkeit bereitgestellt werden kann.

Vor allem die Zwischenlagerung des Schichtaufbaus bietet die eingangs genannten Vorteile, da die Herstellung des Schichtaufbaus von der Herstellung der Oberschicht entkoppelt ist. Es ergibt sich insbesondere eine Senkung der Produktionsdauer und/oder der Herstellungskosten, da die Bereitstellung einer nageldichten Unterdachbahn lediglich durch die Applikation des Schichtaufbaus an die Oberschicht und die Verbindung der Oberschicht mit dem Schichtaufbau bereitgestellt werden kann. So ist es denkbar, lediglich an einem Produktionsstandort den nageldichten Schichtaufbau herzustellen und an unterschiedlichsten Produktionsstandorten die Oberschichten bzw. die nageldichten Unterdachbahnen zu produzieren. Es versteht sich im Übrigen, dass bei einer Unterdeckbahn nicht nur im Bereich von Befestigungsmitteln abgedichtet werden kann, sondern dass die Unterdachbahn auch selbstdichtend bzw. selbstheilend ausgeführt sein kann, wobei Perforationen bzw. Perforationsöffnungen selbsttätig wieder verschlossen werden. Hierbei kennzeichnet der Ausdruck "Perforationen" Öffnungen jeglicher Art, die sich beim Befestigen der Bahn am Untergrund oder durch Beschädigung ergeben. Somit können nicht nur Befestigungsmittel abgedichtet werden, sondern auch beispielsweise unbeabsichtigte Risse oder weitere Beschädigungen an der Bahn.

Im Übrigen weist die Oberschicht vorteilhafterweise eine Mehrzahl von Lagen auf, wobei insbesondere wenigstens eine Membranschicht und wenigstens eine weitere Lage, insbesondere vorgesehen als Schutzschicht, verwendet werden. Die Membranschicht gewährleistet insbesondere die Wasserdichtigkeit und die Wasserdampfdurchlässigkeit der Oberschicht, wobei sie bevorzugt diffusionsoffen ist.

Dabei ist die primäre Aufgabe der Oberschicht, die Regensicherheit für ein Dach unter einer Hartbedachung herzustellen. Eine Oberschicht der in Rede stehenden Art wird, insbesondere auch unabhängig von dem zweilagigen Schichtaufbau, im Baubereich eingesetzt, um Dachkonstruktionen vor Regen, Feuchtigkeit, Flugschnee und Staub zu schützen. Darüber hinaus werden derartige Oberschichten nicht nur zum Schutz von Dächern, sondern auch zum Schutz von Wänden und/oder Fassaden verwendet. Die Wasserdampfdurchlässigkeit gewährleistet dabei, dass Wasserdampf, der als Feuchteüberschuss aus der Baufeuchte und aus bewohnten Bereichen des Daches stammen kann, durch die Oberschicht nach außen entweichen kann. Dieser Wasserdampf wird dabei an die Umgebung abgegeben, so dass erforderlich ist, dass die Oberschicht bzw. Unterdachbahn eine ausreichende Durchlässigkeit für Wasserdampf aufweist. Diese Durchlässigkeit wird durch die selektive Permeabilität sichergestellt.

Da vorzugsweise durch die Membranschicht eine hohe Wasserdichtigkeit der Unterdachbahn gewährleistet wird, ist bevorzugt vorgesehen, dass die Oberseite der Oberschicht der Bewitterungsseite zugewandt ist, wobei der nageldichte Schichtaufbau mit der von der Bewitterungsseite abgewandten Unterseite der Oberschicht verbunden wird. Der nageldichte Schichtaufbau ist so ausgeführt, dass die Wasserdichtigkeit und auch die Wasserdampfdurchlässigkeit der Unterdachbahn gewährleistet wird.

Vorteilhafterweise ist bei dem Verfahrensablauf zur Herstellung der Unterdachbahn vorgesehen, dass bei einer Mehrzahl von Lagen der Oberschicht diese mittels Extrusionsbeschichtung und/oder Dispersionsbeschichtung und/oder Wärmekalandrieren und/oder Kleben und/oder Ultraschallschweißen miteinander verbunden werden. Dabei können die einzelnen Bahnen jeweils mit dem gleichen aber auch mit unterschiedlichen Verfahren der vorgenannten Art miteinander verbunden werden.

Bei der Extrusionsbeschichtung wird geschmolzener thermoplastischer Kunststoff durch eine horizontale Schlitzdüse auf die Materialbahn aufgetragen. So wird ein dauerhaft beschichtetes Bahnmaterial erhalten. Als weiteres Beschichtungsverfahren in der Oberflächentechnik ist die Dispersionsbeschichtung anzusehen, bei der disperse Beschichtungsmaterialien (Lacke) verwendet werden. Die Aushärtung dieser Beschichtungsmaterialien kann lufttrocknend und/oder unter Temperaturzugabe im Ofen erfolgen.

Das Ultraschallschweißen ist ein Verfahren zum Fügen von thermoplastischen Kunststoffen und metallischen Werkstoffen. Die Verschweißung wird dabei durch eine hochfrequente mechanische Schwingung, insbesondere im Bereich zwischen 20 bis 30 Hz, erreicht. Bei der Verschweißung wird zwischen den zu verschweißenden Lagen durch Erwärmung durch molekulare Grenzflächenreibung eine Verbindung realisiert. Das Ultraschallschweißen ist der Gruppe der Reibschweißung zuzuordnen. Neben punktförmigen Schweißungen sind auch Nahtschweißungen möglich. Das Kleben ermöglicht eine stoffschlüssige Verbindung der Lagen, wobei vorgesehen sein kann, dass die Verklebung punktuell, teilflächig und/oder vollflächig aufgetragen wird. Das Kalandrieren bzw. Wärmekalandrieren hingegen wird dabei mittels eines Kalanders - ein System aus mehreren aneinander zugeordneten beheizten Walzen - durchgeführt.

Weiterhin hat sich gezeigt, dass es besonders vorteilhaft ist, dass zur Verbindung der Oberschicht mit dem nageldichten Schichtaufbau Wärmekalandrieren und/oder Kleben und/oder Ultraschallschweißen verwendet wird. Insbesondere ist bei der Verfahrensausgestaltung die Ausführungsvariante, dass ein anderes Verbindungsverfahren der Lagen der Oberschicht und/oder des Schichtaufbaus im Vergleich zur Verbindung der Oberschicht mit dem Schichtaufbau genutzt werden kann, möglich.

Dabei versteht es sich letztlich, dass erfindungsgemäß auch vorgesehen sein kann, dass die Lagen des Schichtaufbaus und/oder der Oberschicht mit dem gleichen Verfahren verbunden werden, das auch zur Verbindung der Oberschicht mit dem Schichtaufbau verwendet wird. Bei unterschiedlichen Verbindungsverfahren können unterschiedliche Produktionsstandorte bzw. Fertigungslinien genutzt werden, so dass sich eine bestmögliche Ausnutzung der vorhandenen Fertigungslinien im Betrieb ergibt. Dies reduziert insbesondere die Herstellungskosten.

Bevorzugt wird für den Schichtaufbau wenigstens eine Dichtschicht und wenigstens eine Schutzschicht vorgesehen, wobei die Dichtschicht nageldicht ausgeführt wird. Dabei weist die nageldichte Dichtschicht ein Material solcher Elastizität und/oder Rückstellkraft auf, dass beim Durchstoßen der Dichtschicht mit dem Befestigungsmittel das das Befestigungsmittel umgebende Material der Dichtschicht das Befestigungsmittel umschließt und im Bereich des Befestigungsmittels bis zu einer Wassersäule von größer bzw. mindestens 200 mm wasserdicht abdichtet. Die Dichtschicht umschließt dabei das Befestigungsmittel bzw. eine Perforation durch ihre elastischen Eigenschaften, drückt insbesondere radial insbesondere gegen das Befestigungsmittel und dichtet dieses innerhalb eines gewissen Bereiches ab.

Vorzugsweise wird die Dichtschicht mit der Schutzschicht des Schichtaufbaus stoffschlüssig und/oder fest verbunden, insbesondere mit einer Klebverbindung. Alternativ oder ergänzend werden die Lagen des Schichtaufbaus mittels Kalt- und Heißnadelperforation perforiert. Die Perforation dient dabei zum einen dazu, die Wasserdampfdurchlässigkeit des Schichtaufbaus bei gleichzeitiger Wasserdichtigkeit sicherzustellen. Sie kann aber auch, und dies gilt insbesondere für die Heißnadelperforation, zum Zwecke der Verbindung der beiden Lagen vorgesehen sein, wenn nämlich das heißnadelperforierte Material der beiden Schichten sich stoffschlüssig miteinander verbindet.

Im Übrigen ist in durchgeführten Versuchsreihen festgestellt worden, dass es besonders vorteilhaft ist, wenn die als Schutzschicht ausgebildete Lage des Schichtaufbaus thermisch kalandriert wird. Die thermische Kalandrierung ist ein mechanisches Verfestigungsverfahren, wobei der Verbund der Fasern, die die Schutzschicht als Vliesschicht aufweist, durch Reibschluss oder durch eine Kombination von Reib- und Formschluss hergestellt wird. Das Verdichten der Fasern erfolgt mittels Kalandern, wobei die Fasern der als Vliesschicht ausgeführten Schutzschicht filzfähig sein sollten und bei thermischer, chemischer und mechanischer Einwirkung untereinander verfilzbar sind.

Neben der thermischen Kalandrierung ist vorzugsweise auch oder alternativ eine chemische Verfestigung vorgesehen, wobei bei chemischen Verfestigungsverfahren der Verbund der Fasern der als Vliesschicht ausgeführten Schutzschicht durch Einbringung von Zusatzstoffen bzw. Additiven mit einem Stoffschluss der Fasern gewährleistet wird. Die Additive sind dabei sogenannte Bindemittel, die vorzugsweise eine adhäsive Bindung erzeugen. Bevorzugt liegt die Verbindung eines Bindemittels, welches in flüssiger Form auf die Schutzschicht appliziert wird, und eine anschließende Wärmebehandlung vor.

Weiter wird bevorzugt die Schutzschicht mittels eines Wasserstrahlverfahrens wasserstrahlverfestigt, wobei analog zur thermischen Kalandrierung ein mechanisches Verfestigungsverfahren vorliegt. Die Fasern werden beim Wasserstrahlverfahren durch eine Verwirbelung verschlungen, insbesondere bei der Verwendung von Hochdruckwasserstrahlen, die auf die Schutzschicht gerichtet sind.

Letztlich ist auch eine Nadelverfestigung möglich, die eine Kombination einer Reib-und Formschlussbindung beinhaltet, wobei die Fasern der Schutzschicht durch mechanische Einwirkungen miteinander verschlungen werden. Das Vernadeln erfolgt dabei mittels einer Vielzahl von speziellen, in einem Nadelbrett oder -balken angeordneten Nadeln, die ein- und ausgestochen werden.

Bei einer vorteilhaften Ausgestaltung des Erfindungsgedankens ist vorgesehen, dass ein thermoplastisches, extrudiertes Kunststoffmaterial für das Material der Dichtschicht verwendet wird, bevorzugt ein polyolefinischer Kunststoff und insbesondere Polypropylen (PP) und/oder Polyethylen (PE). Dabei erfolgt eine Extrusion des Schaumes, wobei die Dichtschicht des Schichtaufbaus letztlich auch aufgeschäumt werden kann. Bei der Schaumextrusion der als Dichtschicht ausgebildeten Lage des Schichtaufbaus können chemische und/oder physikalische Treibmittel zur Extrusion verwendet werden. Dabei wird das Material der als Dichtschicht ausgebildeten Lage der Schutzschicht im Extruder unter hohen Drücken mit Treibgas versetzt, wobei es zuvor aufgeschmolzen worden ist. Nach Austritt aus dem Extruder aus einer Düse expandiert das Material der Dichtschicht.

Des Weiteren ist bei einer weiteren Ausführungsform des Verfahrens vorgesehen, dass zur Verbindung der Lagen des Schichtaufbaus bevorzugt eine Klebeverbindung verwendet wird. Insbesondere ist die Klebeverbindung vorteilhaft, wenn die als Dichtschicht ausgebildete Lage des Schichtaufbaus mittels Kaltnadelperforation perforiert wurde. Eine feste Verbindung der Lagen des Schichtaufbaus gewährleistet, dass sich die Lagen nicht gegeneinander verschieben können, so dass stets die Nadeldichtigkeit erhalten bleibt.

Im Übrigen ist es vorteilhaft, wenn eine Verbindung benachbart verlegter Unterdachbahnen in einfacher Weise möglich ist. Insbesondere bei der Verlegung auf einer Dachfläche wird nicht nur ein fester Verbund der einzelnen Lagen der Unterdachbahn untereinander benötigt, sondern auch eine Verbindung, vorzugsweise regensicher und/oder winddicht, einzelner Unterdachbahnzueinander. Vorzugsweise ist für diese Verbindung vorgesehen, dass an wenigstens einem Rand, insbesondere einem Längsrand, unter- und/oder oberseitig ein Klebebereich in die bzw. an der Unterdachbahn angebracht bzw. eingebracht ist. Dieser Klebebereich ist insbesondere längsrandseitig vorgesehen, wobei es ganz unterschiedliche Möglichkeiten der Anordnung des Klebebereiches gibt. So ist es grundsätzlich möglich, dass überhaupt nur an einem Längsrand ein Klebebereich vorgesehen ist. Bei einer alternativen Ausführungsform ist an einem Längsrand ober- und unterseitig ein Klebebereich vorgesehen. Bei einer anderen Ausführungsform sind auf gegenüberliegenden Längsrändern, aber jeweils auf gleichen Seiten jeweils ein Klebebereich vorgesehen, während bei einer anderen Ausführungsform an gegenüberliegenden Längsrändern auf gegenüberliegenden Seiten Klebebereiche vorgesehen sind. Auch ist es grundsätzlich möglich, dass an beiden Längsrändern ober- und unterseitig Klebebereiche, also letztlich vier Klebebereiche, vorgesehen sind. Durch die Klebebereiche kann letztlich eine Regensicherheit der Verbindung von zwei benachbarten Unterdachbahnen im Randbereich realisiert werden.

Weiterhin kann eine nageldichte Unterdachbahn mit einer, insbesondere der Bewitterungsseite zugewandten, Oberschicht und einem nageldichten, wenigstens zweilagigen Schichtaufbau, hergestellt nach dem zuvor angegebenen und beschriebenen Verfahren, vorgesehen sein.

Die Herstellung der Unterdachbahn mit dem vorgenannten Verfahren bietet eine erhöhte Flexibilität und Individualisierbarkeit bei der Herstellung bzw. Produktion der nageldichten Unterdachbahnen. So können sehr einfach verschiedenste Formen und Funktionalitäten von Unterdachbahnen bereitgestellt werden, die jeweils nageldicht ausgeführt sind. Die zusätzliche Ausführung der Nageldichtigkeit einer bereits bestehenden Unterdachbahn - bzw. im vorliegenden Fall der Oberschicht - erfolgt durch die Anbringung des wenigstens zweilagigen nageldichten Schichtaufbaus unterhalb der Oberschicht. So lässt sie sich auf Kundenwunsch individuell an jede Oberschicht, die ursprünglich als eigenständige Unterdachbahn vorgesehen gewesen ist, der Schichtaufbau zur Gewährleistung der Nageldichtigkeit anbringen. Im Folgenden werden bevorzugte Ausführungsformen der nageldichten Unterdachbahn beschrieben, wobei es sich letztlich versteht, dass bevorzugt die Ausführungsvarianten der Unterdachbahn in Kombination mit dem vorgenannten Verfahren realisiert werden.

Besonders vorteilhaft ist es, wenn die Unterdachbahn wasserdicht und/oder wasserdampfdurchlässig, insbesondere diffusionsoffen, ausgeführt ist. Die Wasserdichtigkeit, insbesondere bei gleichzeitiger Diffusionsoffenheit, gewährleistet, dass Feuchteüberschuss innerhalb des Gebäudes, der in wasserdampffähiger Form vorliegt, durch die Unterdachbahn entweichen kann. Die Wasserdichtigkeit schützt jedoch insbesondere das Dach vor dem Eindringen von Wasser, vorteilhafterweise bei Regen und/oder Schlagregen. Vorzugsweise können dabei die Unterdachbahnen bereits vor Verlegung der Dachsparren auf die Dachkonstruktion aufgebracht werden und den innenliegenden Bereich des Gebäudes vor der Freibewitterung bzw. den Umwelteinflüssen schützen. Der Schutz wird dabei bevorzugt durch die Oberschicht gewährleistet, die die gewünschten Funktionalitäten der Unterdachbahn - abgesehen von der Nageldichtigkeit - aufweist.

Zudem ist vorzugsweise der nageldichte Schichtaufbau mit der von der Bewitterungsseite abgewandten Unterseite der Oberschicht verbunden. Demgemäß ist die Oberseite der Oberschicht der Bewitterungsseite zugewandt und somit den Umwelteinflüssen, insbesondere Regen und/oder Staub und/oder Schnee, ausgesetzt. Der wenigstens zweilagige Schichtaufbau muss insbesondere nicht die schützenden Eigenschaften vor Umwelteinflüssen für die Unterdachbahn aufweisen, sondern lediglich die Nageldichtigkeit für die Unterdachbahn gewährleisten. Dabei versteht es sich letztlich, dass auch der wenigstens zweilagige Schichtaufbau oberhalb der Oberschicht und der Bewitterungsseite zugewandt angebracht sein kann. In diesem Falle ist die Unterseite des wenigstens zweilagigen Schichtaufbaus mit der Oberseite der Oberschicht fest verbunden. Dabei kann auf die zuvor beschriebenen Verbindungsverfahren in gleicher Weise zurückgegriffen werden.

Bei einer besonders bevorzugten Ausgestaltung weist der nageldichte Schichtaufbau wenigstens eine Dichtschicht und wenigstens eine Schutzschicht auf. Bevorzugt wird die Dichtschicht mit der Oberschicht verbunden, vorzugsweise wird dabei die Unterseite der Oberschicht mit der Dichtschicht verbunden. Vorteilhafterweise ist die Schutzschicht auf der der Oberseite abgewandten Unterseite der Unterdachbahn angeordnet, wobei insbesondere die Oberseite der Oberschicht der Bewitterungsseite zugewandt ist und somit die Unterseite der Unterdachbahn von der Bewitterungsseite abgewandt ist. Dabei dichtet die Dichtschicht die Unterdachbahn nageldicht ab und die Schutzschicht schützt bevorzugt die Dichtschicht vor mechanischen Beanspruchungen. Folglich ergibt sich eine erhöhte Belastbarkeit bei mechanischen Beanspruchungen des nageldichten Schichtaufbaus bei weiterhin erhaltenen nageldichten Eigenschaften.

Die Nageldichtigkeit lässt sich dahingehend charakterisieren, dass bevorzugt die nageldichte Dichtschicht ein Material solcher Elastizität und/oder Rückstellkraft aufweist, dass beim Durchstoßen der Dichtschicht mit einem Befestigungsmittel das das Befestigungsmittel umgebende Material der Dichtschicht das Befestigungsmittel umschließt und im Bereich des Befestigungsmittels bis zu einer Wassersäule von größer bzw. mindestens 200 mm wasserdicht abdichtet. Nicht nur Befestigungsmittel können abgedichtet werden, sondern jegliche Perforationen bzw. Perforationsöffnungen, die in der Unterdachbahn auftreten können. Die Dichtschicht kann somit selbstdichtend bzw. selbstheilend sein, so dass Perforationen selbsttätig wieder verschlossen werden können. Bevorzugt erfolgt eine Abdichtung bei Drücken einer Wassersäule zwischen 1000 bis 1500 mm.

Die Wassersäule dient dabei zur Charakterisierung der Wasserdichtigkeit. Zur Beurteilung der Wasserdichtigkeit von Unterdachbahnen sind die DIN 1928 und DIN 20811 heranzuziehen. Diese DIN-Normen zeigen Prüfungsbedingungen bzw. Bestimmungsverfahren zur Bestimmung der Wasserdichtigkeit. Die Wasserdichtigkeit bestimmt dabei maßgeblich den Einsatz der Unterdachbahnen, da diese besonders auf Dächern bei einer freien Bewitterung Feuchtigkeit und eventuell Schlagregen ausgesetzt sind. Die vorgenannten Wassersäulen entsprechen einem hohen Widerstand gegen den Wasserdurchgang gemäß der DIN 20811.

Bei einer bevorzugten Ausgestaltung der Oberschicht weist die Oberschicht ein Vlies auf. Vorteilhafterweise ist das Vlies aus Polyethylenterephthalat (PET) ausgeführt und vorzugsweise mit thermoplastischem Polyurethan (TPU) extrusionsbeschichtet und/oder mit einer Acrylatdispersion beschichtet. Die Polyurethan-Beschichtung ist vorteilhafterweise diffusionsoffen ausgestaltet, insbesondere mit einem s_{d}-Wert von etwa 0,15 m. Das Polyestervlies ist bevorzugt hochreißfest ausgeführt. Das Polyenterephthalatvlies mit der Acrylatdispersion-Beschichtung ist vorzugsweise regensicher ausgeführt und stellt eine Diffusionsoffenheit mit einem s_{d}-Wert von etwa 0,02 m sicher. Das Polyestervlies (PES) (Spezialvlies) ist aufgrund der Acrylatdispersion wasserdicht ausgeführt.

Grundsätzlich hat sich gezeigt, dass es besonders vorteilhaft ist, wenn die Oberschicht eine Mehrzahl von Lagen aufweist. Dabei wird die Funktionalität - neben bzw. unabhängig von der Nageldichtigkeit - der Unterdachbahn durch die Oberschicht gewährleistet, so dass insbesondere eine Wasserdampfdurchlässigkeit und Diffusionsoffenheit der Unterdachbahn vorhanden ist. Insbesondere wird dabei die Wasserdampfdurchlässigkeit mittels der wasserdampfdiffusionsäquivalenten Luftschutzdicke (s_{d}-Wert) referenziert, der bevorzugt zwischen 0,01 bis 1 m ausgeführt ist, weiter bevorzugt zwischen 0,02 bis 0,5 m, weiter bevorzugt weiter zwischen 0,03 bis 0,3 m und insbesondere zumindest im Wesentlichen kleiner oder gleich 0,10 m. Die Diffusionsoffenheit der Unterdachbahn bzw. der Oberschicht ermöglicht es, dass Feuchtigkeit aus dem Inneren des Gebäudes durch die Unterdachbahn bzw. Oberschicht entweichen kann. Dabei charakterisiert der s_{d}-Wert den Wasserdampfdiffusionswiderstand. Die Diffusionsoffenheit definiert das Gegenteil einer Dampfsperre, wobei die Dampfsperre einen hohen Feuchtigkeitsschutz für die Untergrundfläche (auf der sie verlegt ist), gewährleistet. Die Bestimmung des s_{d}-Wertes ist über die DIN 4108 (Wärmeschutz im Hochbau) durch den dritten Teil (Klimabedingter Feuchteschutz; Anforderung, Berechnungsverfahren und Hinweise für die Planung und Ausführung) geregelt. Die DIN 4108-3 definiert als Grenzwert für die Diffusionsoffenheit einen s_{d}-Wert von kleiner als 0,5 m. Demzufolge ist die Unterdachbahn bzw. die Oberschicht bevorzugt so auszuführen, dass sie eine besonders hohe Diffusionsoffenheit, insbesondere bei gewährleisteter Nageldichtigkeit und Wasserdichtigkeit der Unterdachbahn, gewährleistet.

Zur Gewährleistung der Funktionalität - insbesondere der Wasserdichtigkeit und/oder der Wasserdampfdurchlässigkeit - der Unterdachbahn weist die Oberschicht bevorzugt wenigstens eine Membranschicht und wenigstens eine weitere Schicht, insbesondere vorgesehen als Schutzschicht für die Membranschicht, auf. Dabei schützt die Schutzschicht bzw. die weitere Schicht der Oberschicht die Membranschicht vor mechanischen Beanspruchungen, wobei bevorzugt die weitere Schicht als Vliesschicht ausgebildet ist. Die Membranschicht stellt insbesondere die Wasserdichtigkeit der Oberschicht sicher. Die Membranschicht kann dabei monolithisch und/oder mikroporös ausgeführt sein.

Besonders vorteilhaft ist bei der Ausführung der Oberschicht, wenn diese wenigstens eine außenseitige Vliesschicht, wenigstens eine innenseitige Vliesschicht und wenigstens eine mikroporöse Membranschicht insbesondere auf Basis wenigstens eines polyolefinischen Kunststoffes aufweist, wobei die Membranschicht zwischen der außenseitigen Vliesschicht und der innenseitigen Vliesschicht angeordnet ist. Besonders bevorzugt ist bei einer weiteren Ausgestaltung der Oberschicht, dass die Oberschicht eine weitere mikroporöse Membranschicht auf polyolefinischer Kunststoffbasis zwischen der außenseitigen Vliesschicht und der innenseitigen Vliesschicht vorsieht und dass die weitere Membranschicht von der Membranschicht durch eine Trennlage getrennt ist.

Es ist in durchgeführten Versuchen festgestellt worden, dass der Alterungsprozess bei der Oberschicht bei der der Witterung zugewandten äußeren Membranoberfläche beginnt. Darüber hinaus wurde festgestellt, dass, sofern lediglich eine Membranschicht mit einer Schichtdicke verwendet wird, die der Schichtdicke der bei der Oberschicht vorgesehenen Membranschichten entspricht, diese dickere Membranschicht eine geringere Beständigkeit gegen den Alterungsprozess aufweist, als sich dies bei Aufteilung in wenigstens zwei Membranschichten ergibt. Ergänzend ist festgestellt worden, dass es noch nicht einmal erforderlich ist, dass die beiden aufgeteilten Membranschichten zwingend die gleiche Schichtdicke in der Summe aufweisen müssen, als eine einzelne Membranschicht mit vergrößerter Dicke. Die Aufteilung als solches führt auch bei einer verringerten Schichtdicke zu einer Verbesserung der Beständigkeit gegen den Alterungsprozess. Im Übrigen gewährleisten die beiden voneinander getrennten Membranschichten eine sehr hohe Wasserdichtigkeit und bieten im Übrigen eine hohe Wasserdampfdurchlässigkeit. Im Übrigen ist in der Versuchsreihe auch festgestellt worden, dass die Membranfunktionen der Wasserdichtigkeit über einen deutlich längeren Zeitraum als bei Verwendung einer einzelnen homogenen Membranschicht gleicher Schichtdicke erzielt werden kann.

Um die Alterungsbeständigkeit zu verbessern, ist es erforderlich, die beiden Membranschichten voneinander räumlich zu trennen bzw. zu entkoppeln. Dies gelingt dadurch, dass eine Trennlage zwischen den Membranschichten vorhanden ist. Weiterhin hat sich gezeigt, dass die äußere, der Witterung zugewandte Membranschicht den Alterungserscheinungen stärker unterliegt, was die Wasserdichtigkeit dieser Schicht beeinträchtigt. Trotz dieser Beeinträchtigung schützt die äußere Membranschicht die darunterliegende weitere Membranschicht, die der innenseitigen Vliesschicht zugewandt ist, vor alterungsaktiven Umwelteinflüssen. Die der außenseitigen Vliesschicht und der Bewitterung zugewandte Membranschicht stellt eine sogenannte "Opferschicht" dar. Die der innenseitigen Vliesschicht zugewandte Membranschicht stellt dabei die entscheidende wasserdichte und wasserdampfdurchlässige Funktion für die Unterdachbahn über einen sehr langen Benutzungszeitraum, vorzugsweise über mehr als 15 Jahre, sicher.

Bei Langzeitversuchen mit der Oberschicht ist im Übrigen festgestellt worden, dass diese auch nach Voranschreiten des natürlichen Alterungsprozesses der oberseitigen Membranschicht keinen Verlust der mechanischen Eigenschaften, insbesondere der Reißkraft und der Reißdehnung, zeigt.

Zusätzlich ist die Herstellung einer Oberschicht mit den vorgenannten Eigenschaften deutlich kostengünstiger als die Herstellung einer Oberschicht, die eine monolithische Membranschicht aufweist.

In durchgeführten Versuchen konnte weiter festgestellt werden, dass sich die Widerstandsfähigkeit gegen den Alterungsprozess der Oberschicht um mehr als 100 % gegenüber dem aus dem Stand der Technik bekannten Oberschichten verbessern lässt. Dabei wurde insbesondere die Widerstandsfähigkeit gegen UV-Licht und/oder Witterungseinflüsse getestet. Gleichzeitig konnte die hohe Wasserdichtigkeit beibehalten, sogar um bis zu 100 % gesteigert werden.

Darüber hinaus wurde bei Versuchen festgestellt, dass vor allem die Verwendung von zwei Membranschichten, die untereinander durch eine Trennlage entkoppelt sind, eine ausgezeichnete Widerstandsfähigkeit gegen den Alterungsprozess aufweist.

Im Übrigen ist es so, dass grundsätzlich eine Mehrzahl weiterer Membranschichten vorhanden sein können. Im Ergebnis können also mehr als zwei Membranschichten vorgesehen sein. Werden mehr als zwei Membranschichten vorgesehen, befindet sich zwischen zwei benachbarten Membranschichten jeweils eine weitere Trennlage. Auch bei der Verwendung einer Vielzahl von Membranschichten, vorzugsweise zwischen drei bis fünf Membranschichten, konnte festgestellt werden, dass eine eine Mehrzahl von Membranschichten aufweisende Oberschicht im Vergleich zu einer eine einzelne Membranschicht aufweisende Oberschicht, die die Summe der Dicken der einzelnen Membranschichten als Dicke der einzelnen Membranschicht aufweist, eine verbesserte Alterungsbeständigkeit zeigt.

Bei einer weiteren vorteilhaften Ausgestaltung der Oberschicht ist die Verwendung von Polypropylen (PP) und/oder Polyethylen (PE) als Basis für das Material der Membranschicht vorgesehen. Dabei sind Polypropylene (PP) und Polyethylene (PE) den Polyolefinen zuzuordnen.

Im Übrigen hat sich in durchgeführten Versuchen gezeigt, dass es bei einer besonders bevorzugten Ausgestaltungsform der Oberschicht die Membranschicht eine Dicke im Bereich von 20 bis 200 µm, bevorzugt zwischen 30 und 120 µm, weiter bevorzugt zwischen 35 und 100 µm, aufweist.

Diese Dicke der Membranschicht bezieht sich dabei auf die Dicke einer einzelnen Membranschicht, wobei es sich versteht, dass mehrere Membranschichten, wenigstens zwei, in dem Aufbau der Oberschicht verwendet werden. Dabei weisen die Membranschichten bei einer weiteren vorteilhaften Ausführungsvariante ein Flächengewicht zwischen 15 und 150 g/m², bevorzugt zwischen 20 und 100 g/m², weiter bevorzugt zwischen 20 und 50 g/m², auf.

Darüber hinaus wurde bei einer durchgeführten Versuchsreihe deutlich, dass es besonders vorteilhaft ist, wenn die Membranschichten unterschiedlich ausgeführt sind, wobei sie dann insbesondere eine unterschiedliche Dicke und/oder ein unterschiedliches Material aufweisen. Dabei versteht es sich letztlich, dass es auch vorgesehen sein kann, dass die Membranschichten denselben Aufbau bzw. dieselbe Dicke aufweisen können.

Als eine besonders vorteilhafte Ausführungsvariante stellte sich heraus, dass die Dicke der der außenseitigen Vliesschicht zugewandten Membranschicht größer, bevorzugt zwischen 50 % bis 200 %, weiter bevorzugt bis 70 %, weiter bevorzugt weiter bis 85 % und insbesondere zumindest im Wesentlichen bis zu 100 %, als die Dicke der der innenseitigen Vliesschicht zugewandten Membranschicht ausgebildet ist. Dabei bedeuten im vorliegenden Fall die Prozentangaben, dass bei einer um bis zu 100 % größeren Membranschicht diese die zweifache bzw. doppelte Dicke der der innenseitigen Vliesschicht zugewandten Membranschicht aufweist. Die doppelt so dicke Ausführungsform der der außenseitigen Vliesschicht zugewandten Membranschicht führt zu einer deutlichen Verbesserung der Widerstandsfähigkeit gegen den Alterungsprozess, wobei sich durch die unterschiedliche Ausgestaltung der Membranschichten eine Verbesserung um bis zu 10 % im Vergleich zur Ausführung zweier gleich dicker Membranschichten ergibt.

Darüber hinaus wurde auch festgestellt, dass es ebenfalls besonders vorteilhaft ist, wenn die Dicke der der innenseitigen Vliesschicht zugewandten Membranschicht größer, bevorzugt zwischen 50 % bis 200 %, weiter bevorzugt bis 70 %, weiter bevorzugt bis 85 % und insbesondere zumindest im Wesentlichen bis zu 100 %, als die Dicke der der außenseitigen Vliesschicht zugewandten Membranschicht ausgebildet ist. Bei der zweifach so großen bzw. dicken Ausführung (Steigerung um 100 %) der der innenseitigen Vliesschicht zugewandten Membranschicht im Vergleich zu der der außenseitigen Vliesschicht zugewandten Membranschicht ist eine Steigerung der Beständigkeit gegenüber UV-Strahlen um mehr als 70 % im Vergleich zu einer einzelnen Membranschicht, die die Dicke der beiden einzelnen Membranschichten aufweist, erreicht worden. Letztlich ist die Wahl, ob die außenliegende oder die innenliegende Membranschicht dicker ist als die andere Membranschicht oder aber ob beide Membranschichten gleich dick sind, von den jeweiligen Einsatzbedingungen abhängig. Gleiches gilt für den Fall, dass die beiden Membranschichten nicht aus dem gleichen sondern aus einem unterschiedlichen Material bestehen.

Unabhängig von der Auswahl und Ausgestaltung des Materials und/oder der Dicke der eingesetzten Membranschichten ist zu berücksichtigen, dass mit steigender Schichtdicke der jeweiligen Membranschicht eine Erhöhung der Widerstandsfähigkeit gegen den Alterungsprozess einhergeht. Allerdings muss auch berücksichtigt werden, dass bei steigender Schichtdicke insbesondere die Wasserdampfdurchlässigkeit sinkt. Von daher muss für den jeweiligen Einsatzfall das Optimum zwischen gleichzeitig sehr hoher Wasserdampfdurchlässigkeit bei einer ausgezeichneten Beständigkeit gegen den Alterungsprozess gefunden werden.

Die außenseitige Vliesschicht dient als Träger- und Schutzschicht für die darauffolgende Membranschicht. Sie kann auch eine erste Barriere zum Schutz vor UV-Strahlen sein.

Bei einer vorteilhaften Ausgestaltung ist vorgesehen, dass ein Flächengewicht der außenseitigen Vliesschicht zwischen 20 bis 200 g/m², bevorzugt zwischen 30 bis 140 g/m², weiter bevorzugt zwischen 40 bis 100 g/m², weiter bevorzugt weiter zwischen 50 bis 80 g/m² und insbesondere zumindest im Wesentlichen kleiner oder gleich 70 g/m², vorgesehen ist. Dabei wurde in den durchgeführten Versuchen festgestellt, dass sich das Optimum zwischen den zu realisierenden Eigenschaften bei 70 g/m² ergibt.

Bei einer weiteren vorteilhaften Ausgestaltung ist vorgesehen, dass die innenseitige Vliesschicht ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², aufweist. Folglich ist es besonders vorteilhaft, wenn bei einer Außenschicht, die ein Flächengewicht von vorzugsweise 70 g/m² aufweist, eine innenseitige Vliesschicht, die insbesondere ein geringeres Flächengewicht von bevorzugt 20 g/m² aufweist, verwendet wird. Das verringerte Flächengewicht der innenseitigen Vliesschicht ergibt sich, wie festgestellt worden ist, dadurch, dass bei der innenliegenden Anordnung der innenseitigen Vliesschicht nur eine geringere Schutzfunktion als bei der außenseitigen Vliesschicht erforderlich ist. Die Ausgestaltung gewährleistet letztlich einen geringeren Materialverbrauch und führt damit auch zu einer vom Flächengewicht her leichteren bzw. dünneren Unterdachbahn.

Darüber hinaus ist bei einer weiteren bevorzugten Ausführungsform der Oberschicht vorgesehen, dass die Trennlage ebenfalls als Vliesschicht ausgebildet ist. Vorzugsweise weist dabei die Trennlage ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², auf.

Ein weiterer vorteilhafter Aspekt liegt darin, dass die Vliesschicht und/oder die Trennlage bzw. deren Fasern einen, bevorzugt thermoplastischen, Kunststoff, insbesondere Polyester (PES) und/oder Polyethylen (PE) und/oder Polypropylen (PP) und/oder Polyethylenterephthalat (PET), aufweist, insbesondere aus einem solchen besteht. Thermoplastische Kunststoffe ermöglichen dabei insbesondere, dass eine möglichst geringe Schichtdicke bei gleichzeitigem Schutz der Membranschichten gewährleistet werden kann. Die Ausführung der Trennlage als Vliesschicht ergibt dabei nicht nur einen Schutz für die jeweils darunter liegende Membranschicht in Bezug zu der Bewitterungsseite, sondern sie entkoppelt auch die Membranschichten untereinander, so dass die Ausführungsform der Vliesschicht, die einen thermoplastischen Kunststoff aufweist, besonders hohe Entkopplungseigenschaften realisiert. Diese hohen Entkopplungseigenschaften bedingen erst, dass die Bestimmung der der außenseitigen Vliesschicht zugewandten Membranschicht als sogenannte "Opferschicht" möglich ist.

Im Übrigen ist es bei einer besonders bevorzugten Ausgestaltung der Oberschicht vorgesehen, dass die Membranschicht mit der innenseitigen und/oder der außenseitigen Vliesschicht fest verbunden ist. Diese Verbindung wird dabei bevorzugt durch Ultraschallschweißen, insbesondere mit punktuellen Schweißpunkten, und/oder über eine Klebeverbindung bzw. über Kleben, insbesondere über eine punktuelle teilflächige Verklebung, und/oder über Wärmekalandrieren durchgeführt. Zur Verbindung aller Schichten untereinander ist es jedoch nicht ausreichend, lediglich die Membranschicht mit der außen- und/oder innenseitigen Vliesschicht zu verbinden, denn es sind wenigstens zwei Membranschichten bei der Oberschicht vorgesehen, so dass auch die Membranschichten, die voneinander mittels einer Trennlage getrennt werden, verbunden werden. Dabei wird bevorzugt die Membranschicht jeweils über die Trennlage mit der unmittelbar benachbarten Membranschicht verbunden, wobei diese Verbindung mittels Ultraschallschweißen, insbesondere mit punktuellen Schweißpunkten und/oder über Kleben, insbesondere über eine punktuelle teilflächige Verklebung, und/oder über Wärmekalandrieren realisiert wird. Die feste Verbindung der Membranschichten untereinander führt insbesondere dazu, dass die Oberschicht insgesamt eine hohe Reißfestigkeit aufweist. Darüber hinaus wird durch eine Verbindung der einzelnen Schichten untereinander vorzugsweise gewährleistet, dass sich die Schichten nicht gegeneinander verschieben können. Insbesondere durch die Verbindung kann die Oberschicht in einfacher Weise aufgerollt und somit zum Transport und/oder Versand bereitgestellt werden.

Vorzugsweise ist bei einer weiteren Ausführungsform der Unterdachbahn vorgesehen, dass die Dichtschicht mit der Schutzschicht des Schichtaufbaus stoffschlüssig und/oder fest verbunden ist. Insbesondere erfolgt eine stoffschlüssige Verbindung, wenn beide Lagen miteinander verklebt werden und/oder wenn das Material der Dichtschicht bei der Perforation, insbesondere bei der Heißnadelperforation, in die Poren der Schutzschicht dringt und eine Haftung gewährleistet wird, so dass sich eine stoffschlüssige Verbindung, die insbesondere fest ist, ergibt.

Es hat sich gezeigt, dass es besonders vorteilhaft ist, wenn die Dichtschicht und/oder die Schutzschicht perforiert ist/sind. Bei der Perforation, insbesondere mittels einer Heißnadel, kann bereits während des Perforationsvorgangs ein Verschmelzen der Lagen des Schichtaufbaus erfolgen, so dass eine nachträgliche zusätzliche Klebeverbindung bevorzugt entfallen kann.

Darüber hinaus ist bei einer weiteren bevorzugten Ausführungsform der nageldichten Unterdachbahn vorgesehen, dass die Schutzschicht des Schichtaufbaus und/oder die weitere Schicht, insbesondere die Schutzschicht und/oder die Vliesschicht und/oder die Trennlage, der Oberschicht als Vliesschicht ausgebildet ist. Dabei versteht es sich letztlich, dass auch die weitere Schicht der Oberschicht, die als Vliesschicht ausgebildet sein kann, thermisch kalandriert und/oder chemisch verfestigt und/oder wasserstrahl- und/oder nagelverfestigt ist. Die Vliesschicht des Schichtaufbaus und/oder der Oberschicht schützt dabei die unter ihr vorhandenen von der Beanspruchungsseite abgewandten Lagen vor mechanischen Beanspruchungen, so dass sich eine Erhöhung insbesondere Reißfestigkeit ergibt.

Es hat sich gezeigt, dass es besonders bevorzugt ist, wenn die Schutzschicht und/oder die weitere Schicht der Oberschicht, die bevorzugt als Vliesschicht ausgebildet werden, einen polyolefinischen Kunststoff, bevorzugt Polypropylen (PP) und/oder Polyethylen (PE), und/oder Polyethylenterephthalat (PET) und/oder ein thermoplastisches Elastomer (TPE), vorzugsweise thermoplastisches Polyurethan (TPU), aufweist. Es wurde bei durchgeführten Versuchen festgestellt, dass besonders die vorgenannten Materialien die Oberschicht bzw. den Schichtaufbau gut vor mechanischen Beanspruchungen schützen. Insbesondere hält die Unterdachbahn durch die Schutzschichten einer Reißkraft von 500 Newton pro 5 cm in Längs- und Querrichtung stand.

Weiterhin hat sich gezeigt, dass bei einer bevorzugten Ausführungsvariante der Unterdachbahn die Schutzschicht und/oder die weitere Schicht der Oberschicht ein Flächengewicht zwischen 10 bis 400 g/m², bevorzugt zwischen 20 bis 200 g/m², weiter bevorzugt zwischen 30 bis 100 g/m², aufweist. Die vorgenannten Flächengewichte definieren das in Versuchen ermittelte Optimum zwischen erhaltener Reißfestigkeit bzw. der Standhaltung von mechanischen Beanspruchungen und einem möglichst geringen Gesamtflächengewicht der Unterdachbahn.

Bei einer weiteren bevorzugten Ausgestaltung weist die Dichtschicht einen thermoplastischen, polyolefinischen, vorteilhafterweise extrudierten, Kunststoff, bevorzugt Polypropylen (PP) und/oder Polyethylen (PE) und/oder Ethylen-Vinylacetat-Copolymere (EVAC/EVA), und/oder ein thermoplastisches Elastomer, vorzugsweise Polyurethan (TPU), auf. Die vorgenannten thermoplastischen, polyolefinischen Kunststoffe lassen sich mittels einer Schaumextrusion aufschäumen und gewährleisten die elastischen Eigenschaften der Dichtschicht, die erst eine Umschließung des Befestigungsmittels in der Unterdachbahn ermöglichen und somit erst die Nageldichtigkeit der Unterdachbahn gewährleisten.

Bevorzugt ist bei der Schaumextrusion der thermoplastischen, polyolefinischen Kunststoffe eine geschlossenporige Struktur der Dichtschicht zu erzeugen. Neben der geschlossenporigen bzw. geschlossenzelligen Struktur der Dichtschicht ist auch eine offenporige Struktur möglich, wobei die Offenporigkeit derart auszuwählen ist, dass eine Wasserdichtigkeit mit den zuvor genannten Wassersäulen erreicht wird, gleichzeitig aber die notwendige Wasserdampfdurchlässigkeit entsprechend den vorgenannten Werten erreicht wird. Zur Erreichung einer offenporigen Struktur wird bevorzugt ein Material der Dichtschicht verwendet, welches geschäumt wird. Das Material der Dichtschicht kann neben den vorgenannten thermoplastischen, polyolefinischen Kunststoffen eine geschäumte, insbesondere wässrige und/oder lösemittelhaltige, Polymerdispersion, bevorzugt auf Basis von Polyurethan (PU) und/oder Polyvinylchlorid (PVC) und/oder Acrylat, aufweisen. Wird eine geschlossenporige Struktur der Dichtschicht gewählt, wird bevorzugt eine Perforation der Dichtschicht durchgeführt, so dass die Wasserdampfdurchlässigkeit trotz der geschlossenzelligen Struktur gewährleistet ist. Alternativ und/oder zusätzlich zur geschlossenporigen Struktur ist vorzugsweise eine offenporige Struktur vorgesehen, wobei sie insbesondere mit feinen Zellen bzw. Poren ausgeführt ist, insbesondere wobei die Wasserdampfdurchlässigkeit durch die offenporige bzw. offenzellige Struktur der Dichtschicht selbst erreicht wird.

Bei einer bevorzugten Ausgestaltung der Dichtschicht ist eine Dicke zwischen 0,05 bis 10 mm, bevorzugt zwischen 0,1 bis 5 mm, weiter bevorzugt zwischen 0,5 bis 2 mm, vorgesehen. Diese Dicke ist dabei so groß ausgeführt, dass eine Nageldichtigkeit gewährleistet werden kann, insbesondere wenn die Unterdachbahn mit Befestigungsmittel durchstoßen wurde, gleichzeitig ist sie jedoch so dünn ausgeführt, dass die Unterdachbahn bzw. der Schichtaufbau so leicht wie möglich ausgeführt ist. Vorzugsweise weist die Dichtschicht eine Dichte, insbesondere ein Schaumlitergewicht, zwischen 1 bis 500 kg/m³, bevorzugt zwischen 5 bis 200 kg/m³, weiter bevorzugt zwischen 10 bis 100 kg/m³, auf.

Vorzugsweise weist die Dichtschicht ein Elastizitätsmodul zwischen 0,01 bis 20 kN/mm², bevorzugt zwischen 0,005 bis 1 kN/mm², auf. Dabei ist insbesondere die Elastizität so groß, dass sich eine selbstdichtende Dichtschicht ergibt.

Bei einer besonders vorteilhaften Ausgestaltung weist die Unterdachbahn am Längsrand unter- und/oder oberseitig wenigstens einen Klebebereich auf. Der Klebebereich dient zur Verbindung der Unterdachbahnen untereinander bei der Verwendung der Unterdachbahnen auf einer ebenen Fläche. Bevorzugt ist die Klebeverbindung so auszuführen, dass eine möglichst leichte Verlegung der Unterdachbahnen bei gleichzeitig gewährleisteter Regensicherheit der Verbindungsstelle der Unterdachbahnen möglich ist.

Im Übrigen ist die Verwendung der Unterdachbahn als Unterdeckbahn und/oder Unterspannbahn und/oder als Wandabdeckung und/oder als Fassadenabdeckung, insbesondere zur Abdichtung, vorgesehen.

Grundsätzlich ist es auch denkbar, die Dichtschicht als viskoelastisches Gel auszuführen.

Im Ergebnis betrifft die Erfindung ein Verfahren zur Herstellung einer nageldichten Unterdachbahn, die vorzugsweise als Unterspannbahn bzw. Unterdeckbahn verwendet wird. Die Unterdachbahn weist eine wenigstens einlagige, insbesondere der Bewitterung zugewandte, Oberschicht und einen nageldichten, wenigstens zweilagigen Schichtaufbau auf. Die Herstellung der Oberschicht ist räumlich und zeitlich getrennt von der Herstellung des Schichtaufbaus, wobei zur Herstellung der nageldichten Unterdachbahn eine Verbindung der Oberschicht mit dem Schichtaufbau erfolgt, und wobei der Schichtaufbau vor der Herstellung der Unterdachbahn, insbesondere in Rollenform, zwischengelagert wird. Erfindungsgemäß können verschiedene Unterdachbahnen hergestellt werden, wobei auch bei unterschiedlichen Oberschichten stets derselbe Schichtaufbau vorgesehen ist.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Weitere Merkmale, Vorteile und Anwendungsmöglichkeiten der vorliegenden Erfindung ergeben sich aus der Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von Ihrer Zusammenfassung in den Ansprüchen oder deren Rückbeziehung.

Es zeigt
- Fig. 1: eine schematische Querschnittsansicht einer Unterdachbahn,
- Fig. 2: eine schematische Querschnittsansicht einer weiteren Ausführungsform einer Unterdachbahn,
- Fig. 3: eine schematische Querschnittsansicht einer weiteren Ausführungsform einer Unterdachbahn,
- Fig. 4: eine schematische Querschnittsansicht einer weiteren Ausführungsform einer Unterdachbahn,
- Fig. 5: eine schematische Querschnittsansicht einer weiteren Ausführungsform einer Unterdachbahn,
- Fig. 6: eine schematische Querschnittsansicht eines Schichtaufbaus,
- Fig. 7: schematische Querschnittsansichten verschiedener Ausführungsformen einer Oberschicht,
- Fig. 8: eine schematische Querschnittsansicht einer Unterdachbahn mit einem Befestigungsmittel,
- Fig. 9: ein schematischer Verfahrensablauf zur Herstellung eines Schichtaufbaus, einer Oberschicht und einer Unterdachbahn,
- Fig. 10: eine schematisch perspektivische Darstellung der Unterdachbahn bei Verwendung als Unterspannbahn und
- Fig. 11: eine schematische Draufsicht auf weitere Ausführungsformen einer Unterdachbahn.

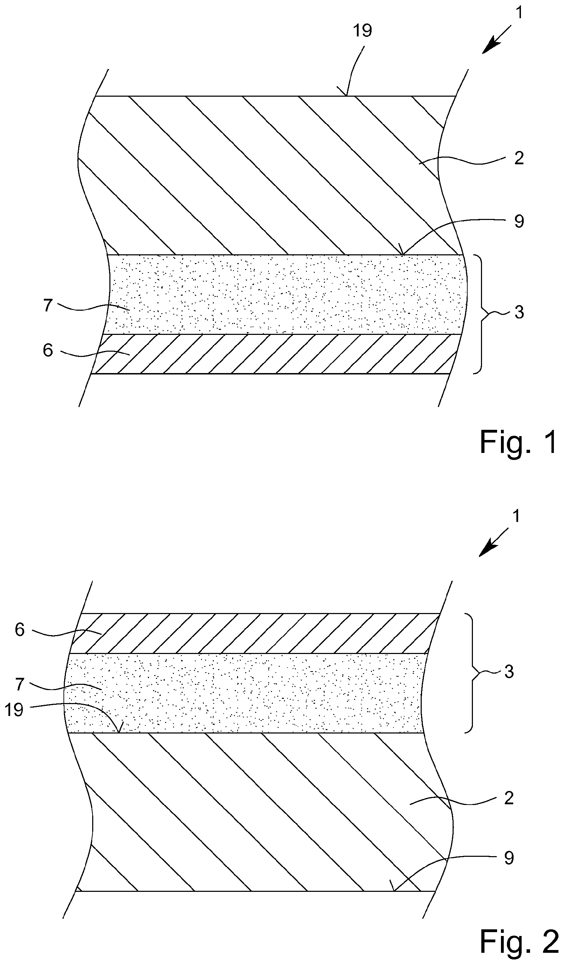

Die Erfindung betrifft ein Verfahren zur Herstellung einer nageldichten Unterdachbahn 1, wobei die Unterdachbahn 1 gemäß Fig. 1 eine wenigstens einlagige, insbesondere der Bewitterungsseite zugewandte, Oberschicht 2 und einen nageldichten, wenigstens zweilagigen Schichtaufbau 3 aufweist. Verfahrensgemäß ist vorgesehen, dass die Oberschicht 2 räumlich und zeitlich getrennt von dem nageldichten Schichtaufbau 3 hergestellt wird, dass der Schichtaufbau vor der Herstellung der Unterdachbahn, insbesondere in Rollenform, zwischengelagert wird, und dass die Oberschicht 2 mit dem zweilagigen Schichtaufbau 3, insbesondere fest und/oder stoffschlüssig, verbunden wird.

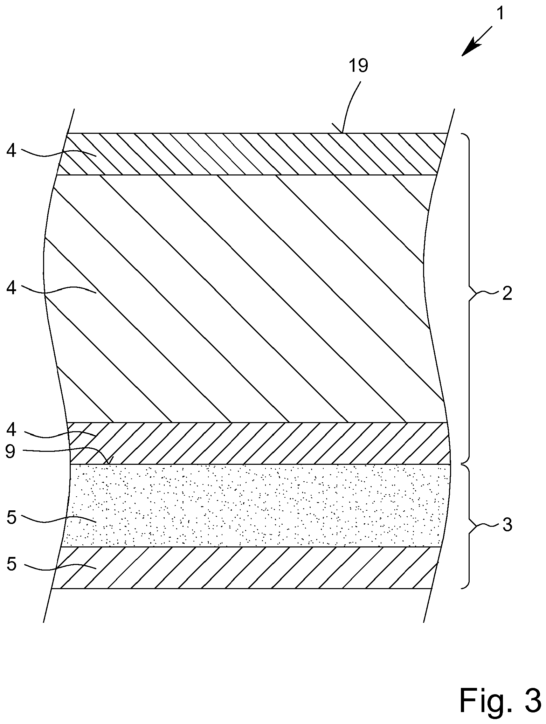

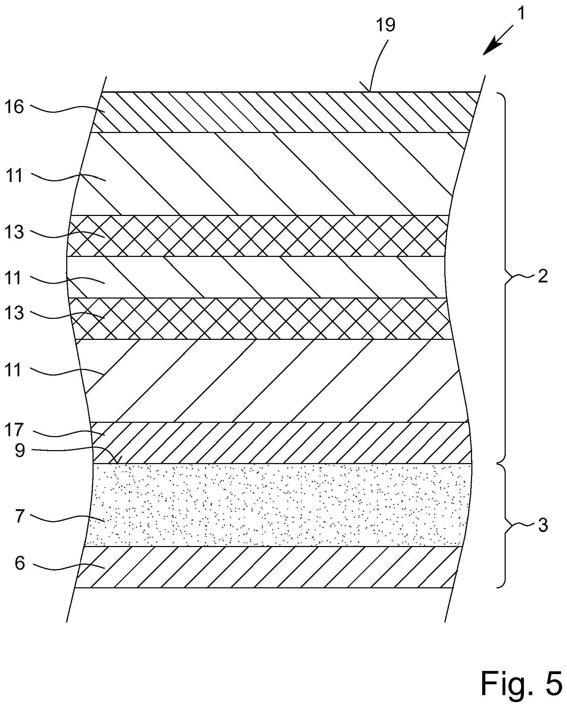

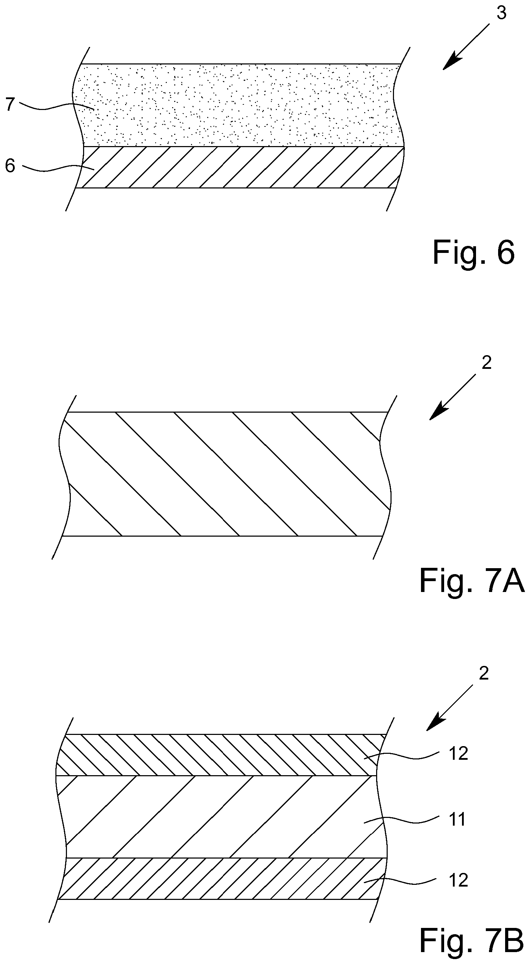

Der Schichtaufbau 3 gemäß Fig. 6 wird unabhängig von der Oberschicht 2 gemäß Fig. 7 hergestellt. Demzufolge ist insbesondere keine Inline-Fertigung einer nageldichten Unterdachbahn 1 mit all ihren Schichten vorgesehen. Die Oberschicht 2 kann gemäß Fig. 7b eine Mehrzahl von Lagen 4 (gemäß Fig. 3) aufweisen, wobei sie bevorzugt wenigstens eine Membranschicht 11 und eine weitere Membranschicht 12 (gemäß Fig. 7b), insbesondere eine Schutzschicht, die als Vliesschicht 16, 17 (gemäß Fig. 5) ausgebildet ist, aufweist. Es können verschiedene Unterdachbahnen 1 unter Variation der Oberschicht 2 hergestellt werden, wobei insbesondere stets derselbe Schichtaufbau 3 verwendet werden kann, um die Nageldichtigkeit der Unterdachbahn 1 zu gewährleisten.

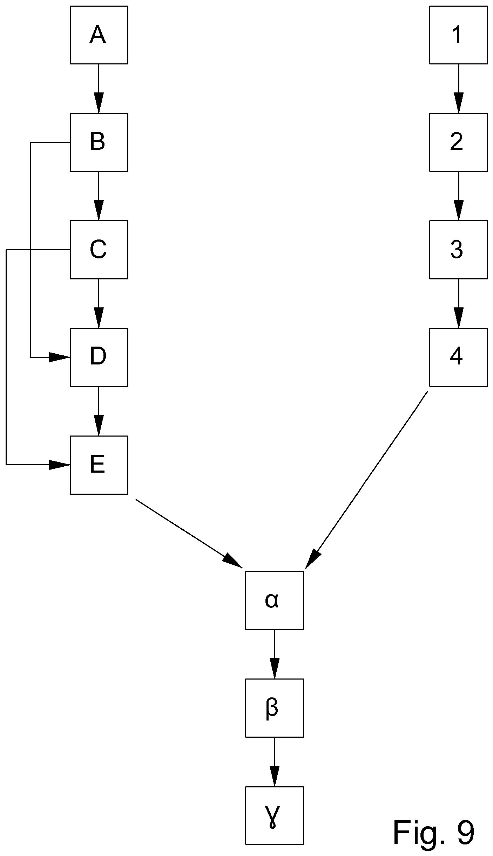

Die Fig. 9 zeigt schematisch die Herstellung einer nageldichten Unterdachbahn 1, wobei es sich letztlich versteht, dass nicht alle Verfahrensschritte gemäß Fig. 9 in nicht dargestellten Verfahrensausgestaltungen durchgeführt werden müssen.

Zur Herstellung des Schichtaufbaus 3 erfolgt zunächst in dem dargestellten Ausführungsbeispiel des Verfahrensablaufes gemäß Fig. 9 eine Bereitstellung der als Schutzschicht 6 ausgebildeten Lage des Schichtaufbaus 3 im Schritt A. Zur Herstellung der Schutzschicht 6 ist vorgesehen, dass eine Vliesschicht verwendet wird, die thermisch kalandriert und/oder chemisch verfestigt und/oder wasserstrahl-und/oder nagelverfestigt wird. Die Vliesschicht bzw. die Schutzschicht 6 des Schichtaufbaus 3 schützt insbesondere die Dichtschicht 7 des Schichtaufbaus 3 gemäß Fig. 6.

Nach der Bereitstellung der Schutzschicht 6 erfolgt die Herstellung der Dichtschicht 7 im Schritt B. In dem dargestellten Ausführungsbeispiel wird das Material der Dichtschicht 7 innerhalb einer Schaumextrusion mittels wenigstens eines Extruders extrudiert. Zur Extrusion werden chemische und/oder physikalische Treibmittel verwendet. In einem nicht dargestellten Ausführungsbeispiel ist vorgesehen, dass die Dichtschicht 7 aufgeschäumt wird. Wird eine offenporige Struktur der Dichtschicht 7 gewählt, so kann die nachfolgende Perforation der Dichtschicht 7 und/oder der Schutzschicht 6 im Schritt C entfallen.

Bei einer geschlossenzelligen bzw. geschlossenporigen Dichtschicht 7 ist gemäß dem Ausführungsbeispiel vorgesehen, dass die Dichtschicht 7 und/oder die Schutzschicht 6 des Schichtaufbaus 3 perforiert werden. Zur Perforation wird im dargestellten Ausführungsbeispiel eine Kalt- und/oder Heißnadelperforation verwendet. Bei der Heißnadelperforation verschmelzen innerhalb des Verbindungsbereiches die Dichtschicht 7 mit der Schutzschicht 6 miteinander, wobei das Material der Dichtschicht 7 in die Poren der Schutzschicht 6 dringen kann und sich dort insbesondere mechanisch verhakt. Folglich kann eine zusätzliche Verbindung im Schritt D entfallen.

Wird jedoch noch zusätzlich eine Klebeverbindung der Dichtschicht 7 mit der Schutzschicht 6 benötigt, so erfolgt diese Verklebung im Schritt D, wobei die Schichten 6, 7 fest und/oder stoffschlüssig miteinander verbunden werden.

Nach der Herstellung des nageldichten Schichtaufbaus erfolgt im Schritt E gemäß der dargestellten Ausführungsform eine Zwischenlagerung. Im Zwischenlager ist insbesondere die Lagerung des Schichtaufbaus in Rollenform bzw. aufgerollt in einem nicht dargestellten Ausführungsbeispiel bevorzugt.

Räumlich und zeitlich getrennt erfolgt die Herstellung der Oberschicht 2. Im ersten Schritt wird die weitere Schicht 12 der Oberschicht 2, die insbesondere als Vliesschicht 16, 17 ausgeführt ist, bereitgestellt bzw. hergestellt. Anschließend erfolgt im zweiten Schritt die Herstellung wenigstens einer Membranschicht 11 der Oberschicht 2.

Gemäß dem dargestellten Ausführungsbeispiel wird im dritten Schritt die Membranschicht 11 mit wenigstens einer weiteren Schicht 12, insbesondere mit der außenseitigen Vliesschicht 16 und/oder der innenseitigen Vliesschicht 17 (gemäß Fig. 5), verbunden. Bei der Verbindung dieser mehreren Lagen 4 (gemäß Fig. 3) der Oberschicht 2 im dritten Schritt wird das Verbindungsverfahren mittels Wärmekalandrieren und/oder Kleben und/oder Ultraschallschweißen durchgeführt.

Auch die Oberschicht 2 kann im vierten Schritt zwischengelagert werden, wobei es sich letztlich versteht, dass die Oberschicht 2 auch nach dem dritten Schritt - ohne die Gewährleistung der Funktionalität der Nageldichtigkeit - als Unterdeckbahn bzw. Unterspannbahn und/oder als Fassadenabdeckung verwendet werden kann.

Gemäß Fig. 9 ist anschließend mit dem Zusammenfügen des Schichtaufbaus 3 und der Oberschicht 2 die Herstellung der Unterdachbahn 1 vorgesehen. Im ersten Schritt α werden die einzelnen Schichten 2, 3 bereitgestellt und anschließend im Schritt β miteinander verbunden. Zur Verbindung der Schichten 2, 3 ist bevorzugt Extrusionsbeschichtung und/oder Dispersionsbeschichtung und/oder Wärmekalandrieren und/oder Kleben und/oder Ultraschallschweißen zur verwenden. Grundsätzlich ist in einem nicht dargestellten Ausführungsbeispiel vorzugsweise vorgesehen, dass ein anderes Verfahren zur Herstellung der Unterdachbahn 1 verwendet wird als zur Herstellung der Oberschicht 2 und/oder des Schichtaufbaus 3.

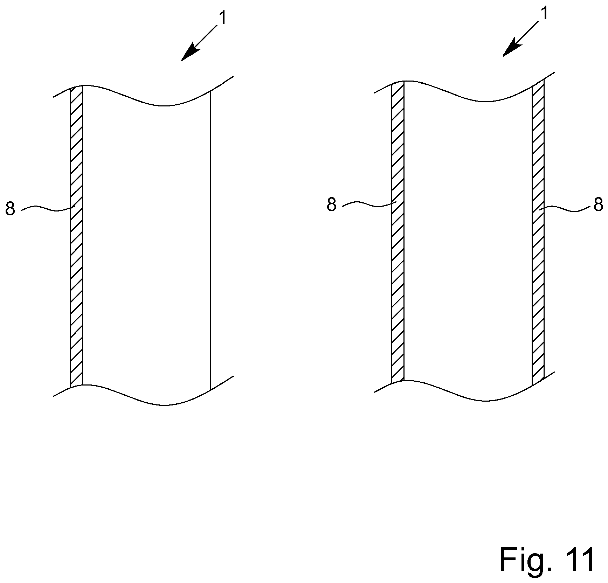

Im letzten Schritt γ ist gemäß der dargestellten Ausführungsform des Verfahrens vorgesehen, dass auf dem Rand, insbesondere auf dem Längsrand, unter-und/oder oberseitig der Unterdachbahn 1 wenigstens ein Klebebereich 8 gemäß Fig. 11 aufgebracht wird.

Die in den Ausführungsbeispielen dargestellte Unterdachbahn 1 ist nach dem vorgenannten Verfahren gemäß Fig. 9 hergestellt. Die nageldichte Unterdachbahn 1 weist eine, insbesondere der Bewitterungsseite zugewandte, Oberschicht 2 und einen nageldichten, wenigstens zweilagigen Schichtaufbau 3 auf.

Die Unterdachbahn 1 ist gemäß allen Ausführungsvarianten sowohl wasserdicht als auch wasserdampfdurchlässig, wobei insbesondere die Wasserdampfdurchlässigkeit eine Diffusionsoffenheit bedingt. In einem nicht dargestellten Ausführungsbeispiel ist vorgesehen, dass die Unterdachbahn 1 wasserdicht und/oder wasserdampfdurchlässig ausgeführt ist. Die Fig. 1 verdeutlicht, dass der nageldichte Schichtaufbau 3 mit der von der Bewitterungsseite abgewandten Unterseite 9 der Oberschicht 2 verbunden ist. Darüber hinaus zeigt die Fig. 1, dass die Unterseite 9 der Oberschicht 2 mit der Dichtschicht 7 des Schichtaufbaus 3 verbunden ist. Dabei ist die Schutzschicht 6 des Schichtaufbaus 3 unterhalb der Dichtschicht 7 angeordnet.

Es kann weiter vorgesehen sein, dass gemäß Fig. 2 erneut die Dichtschicht 7 mit der Oberschicht 2 verbunden ist. Jedoch ist gemäß Fig. 2 vorgesehen, dass die Unterseite 9 der Oberschicht 2 von der Dichtschicht 7 abgewandt ist, wobei die Oberseite 19 der Oberschicht 2 mit der Dichtschicht 7 verbunden ist. In dem Ausführungsbeispiel gemäß Fig. 2 ist vorgesehen, dass der Schichtaufbau 3, insbesondere die Schutzschicht 6, der Bewitterungsseite zugewandt ist.

Zusätzlich verdeutlichen die Fig. 1 und 2, dass der Schichtaufbau 3 wenigstens eine Dichtschicht 7 und wenigstens eine Schutzschicht 6 aufweist. Die Dichtschicht 7 dichtet dabei die gesamte Unterdachbahn 1 wasserdicht ab, wobei die Schutzschicht 6 die Dichtschicht 7 vor mechanischen Beanspruchungen schützt. Nicht dargestellt ist, dass mehrere Dichtschichten 7 und/oder eine Mehrzahl von Schutzschichten 6 innerhalb des Schichtaufbaus 3 vorgesehen sein können.

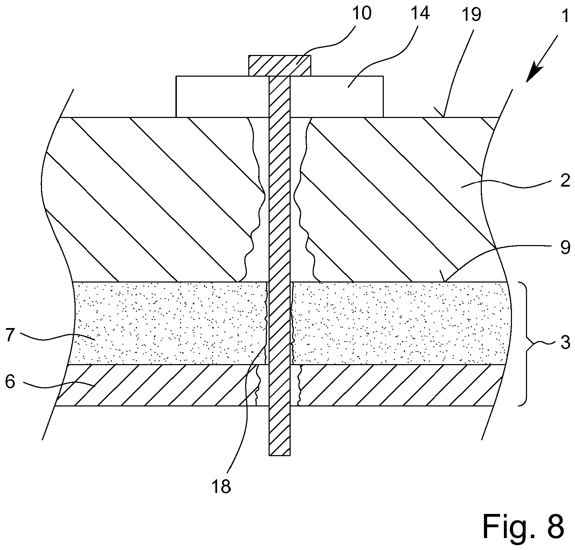

Die Nageldichtigkeit wird durch die Dichtschicht 7 gewährleistet. Das Funktionsprinzip ist gemäß Fig. 8 dargestellt. Nicht dargestellt ist, dass die Dichtschicht 7 auch jegliche Perforation der Unterdachbahn 9 abdichten kann. In dem Ausführungsbeispiel gemäß Fig. 8 ist die Abdichtung 18 bei Durchstoßen der Unterdachbahn 1 mit einem Befestigungsmittel 10 dargestellt. Darüber hinaus ist oberhalb der Unterdachbahn 1 ein Holzstück 14, insbesondere eine Konterlatte, angebracht. Die Nageldichtigkeit der Unterdachbahn 1 wird dabei durch das Material der nageldichten Dichtschicht 7 des Schichtaufbaus 3 gewährleistet, wobei das Material eine solche Elastizität und/oder Rückstellkraft aufweist, dass beim Durchstoßen der Dichtschicht 7 das das Befestigungsmittel 10 umgebende Material der Dichtschicht 7 das Befestigungsmittel 10 umschließt und im Bereich des Befestigungsmittels 10 mit einer Wassersäule von größer und/oder mindestens 200 mm abdichtet. Die Abdichtung 18 mittels des Materials der Dichtschicht 7 ist in der Fig. 8 verdeutlicht. Die Abdichtung 18 gewährleistet, dass die gesamte Unterdachbahn 1 auch nach Durchstoßen des Befestigungsmittels 10 weiterhin eine hinreichende Wasserdichtigkeit sicherstellt. In einem nicht dargestellten Ausführungsbeispiel ist vorgesehen, dass die Abdichtung 18 bis zu einer Wassersäule von größer 1000 mm, insbesondere zwischen 1000 bis 1500 mm, wasserdicht ist.

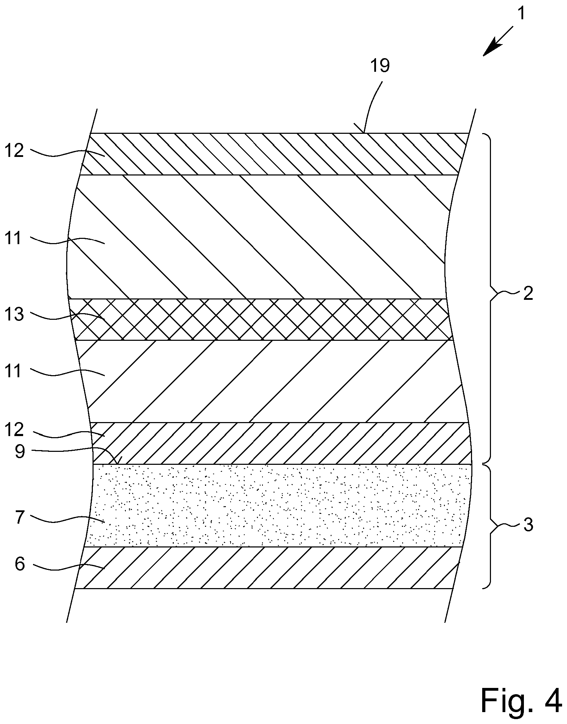

Die Fig. 3 zeigt, dass die Oberschicht 2 eine Mehrzahl von Lagen 4 aufweist. Dabei können diese mehreren Lagen 4 der Oberschicht 2 als Membranschicht 11 und als Schutzschicht bzw. weitere Schicht 12 der Oberschicht 2 gemäß Fig. 4 ausgeführt sein. Dabei weist die Oberschicht 2 wenigstens eine Membranschicht 11, gemäß Fig. 4 zwei Membranschichten 11, und wenigstens eine weitere Schicht 12, gemäß Fig. 4 drei weitere Schichten 12, 13, auf. Die weiteren Schichten 12, 13 der Oberschicht 2 sind dabei als Schutzschicht, insbesondere als Vliesschicht, ausgeführt. Das Ausführungsbeispiel gemäß Fig. 4 zeigt, dass die Oberseite 19 der Oberschicht 2 der Bewitterungsseite zugewandt ist, wobei die Unterseite 9 der Oberschicht 2 der Dichtschicht 7 des Schichtaufbaus 3 zugewandt ist. Die Schutzschicht 6 des Schichtaufbaus 3 ist dabei von der Bewitterungsseite abgewandt.

Nicht dargestellt ist, dass die Dichtschicht 7 mit der Schutzschicht 6 stoffschlüssig und/oder fest verbunden ist. Eine stoffschlüssige Verbindung kann insbesondere durch die Verwendung einer Klebeverbindung gewährleistet werden und/oder bevorzugt bei der Heißnadelperforation erreicht werden.

Weiter nicht dargestellt ist, dass die Dichtschicht 7 und/oder die Schutzschicht 6 des Schichtaufbaus 3 perforiert ist/sind.

Gemäß dem Ausführungsbeispiel, das durch Fig. 4 verdeutlicht wird, ist vorgesehen, dass die Schutzschicht 6 des Schichtaufbaus 3 und/oder die weitere Schicht 12 der Oberschicht 2 als Vliesschicht ausgebildet ist/sind.

In den dargestellten Ausführungsvarianten ist das Material der Schutzschicht 6 und/oder der weiteren Schicht 12 der Oberschicht 2 ein polyolefinischer Kunststoff, bevorzugt Polypropylen. Weitere denkbare polyolefinische Kunststoffe sind Polyethylen (PE), und/oder Polyethylenterephthalat (PET) und/oder ein thermoplastisches Elastomer (TPE), vorzugsweise thermoplastisches Polyurethan (TPU). Darüber hinaus ist in dem dargestellten Ausführungsbeispiel vorgesehen, dass die Schutzschicht 6 und/oder die weitere Schicht 12 der Oberschicht 2 ein Flächengewicht von zumindest im Wesentlichen 50 g/m² +/- 10 g/m² aufweist. In weiteren, nicht dargestellten Ausführungsformen kann vorgesehen sein, dass die Schutzschicht 6 und/oder die weitere Schicht 12 der Oberschicht 2 ein Flächengewicht zwischen 10 bis 400 g/m², bevorzugt zwischen 20 bis 200 g/m², weiter bevorzugt zwischen 30 bis 100 g/m², aufweist.

Im Übrigen ist in den dargestellten Ausführungsbeispielen vorgesehen, dass die Dichtschicht 7 als Material Polypropylen (PP) aufweist, welches extrudiert worden ist. In weiteren, nicht dargestellten Ausführungsbeispielen ist die Verwendung eines thermoplastischen, polyolefinischen, vorteilhafterweise extrudierten, Kunststoff, bevorzugt Polyethylen (PE) und/oder Ethylen-Vinylacetat-Copolymere (EVAC/EVA), und/oder ein thermoplastisches Elastomer, vorzugsweise Polyurethan (TPU), vorgesehen. Nicht dargestellt ist, dass das Material der Dichtschicht 7 eine geschlossenzellige bzw. geschlossenporige Struktur aufweist. In weiteren Ausführungsformen kann vorgesehen sein, dass das Material der Dichtschicht 7 offenporig ausgestaltet ist. Ferner kann als Material der Dichtschicht 7 eine geschäumte, insbesondere wässrige und/oder lösemittelhaltige, Polymerdispension, bevorzugt auf Basis von Polyurethane (PU) und/oder Polyvinylchlorid (PVC) und/oder Acrylat, vorgesehen sein. Unabhängig vom Material der Dichtschicht 7 muss aber grundsätzlich gewährleistet sein, dass die Dichtschicht 7 hinreichend wasserdicht und im Übrigen wasserdampfdurchlässig ist.

Zur Gewährleistung der Wasserdampfdurchlässigkeit ist bei der nicht dargestellten geschlossenporigen Dichtschicht 7 eine Perforation vorgesehen. Bei einer ebenfalls nicht dargestellten offenporigen Dichtschicht 7 weist diese feine Poren auf, so dass die Wasserdichtigkeit sichergestellt ist.

Die Dichtschicht 7 weist gemäß Fig. 1 eine Dicke von zumindest im Wesentlichen 1 mm +/- 10 % auf. In weiteren Ausführungsformen kann vorgesehen sein, dass die Dichtschicht 7 eine Dicke zwischen 0,05 bis 10 mm, bevorzugt zwischen 0,1 bis 5 mm, weiter bevorzugt zwischen 0,5 bis 2 mm, aufweist. Im Übrigen ist gemäß Fig. 1 eine Dichtschicht mit einer Dichte von zumindest im Wesentlichen 50 kg/m³ +/- 10 % vorgesehen. In weiteren, nicht dargestellten Ausführungsvarianten der Unterdachbahn 1 weist die Dichtschicht 7 eine Dichte, insbesondere ein Schaumlitergewicht, zwischen 1 bis 500 kg/m³, bevorzugt zwischen 5 bis 200 kg/m³, weiter bevorzugt zwischen 10 bis 100 kg/m³, auf.

Die Fig. 11 verdeutlicht, dass die Unterdachbahn am Längsrand wenigstens einen Klebebereich 8 aufweist. Nicht dargestellt ist, dass dieser Klebebereich 8 sowohl unter- als auch oberseitig vorgesehen sein kann.

Nicht dargestellt ist, dass der Klebebereich 8 bevorzugt mit einem Liner, beispielsweise silikoniertes Papier, abgedeckt werden kann. Der Klebebereich 8 kann neben einen gemäß Fig. 5 dargestellten vollflächigen Auftrag auch einen teilflächigen oder punktuellen Auftrag längsrandseitig auf der Unterdachbahn 1 bzw. auf der Außenseite und/oder auf der Innenseite der Unterdachbahn 1 vorsehen. In dem dargestellten Ausführungsbeispiel beträgt die Breite des Klebebereichs 8 zumindest im Wesentlichen 5 cm +/- 10 %. In weiteren, nicht dargestellten Ausführungsformen ist insbesondere vorgesehen, dass die Breite des Klebebereichs 8 zwischen 3 bis 10 cm variiert.

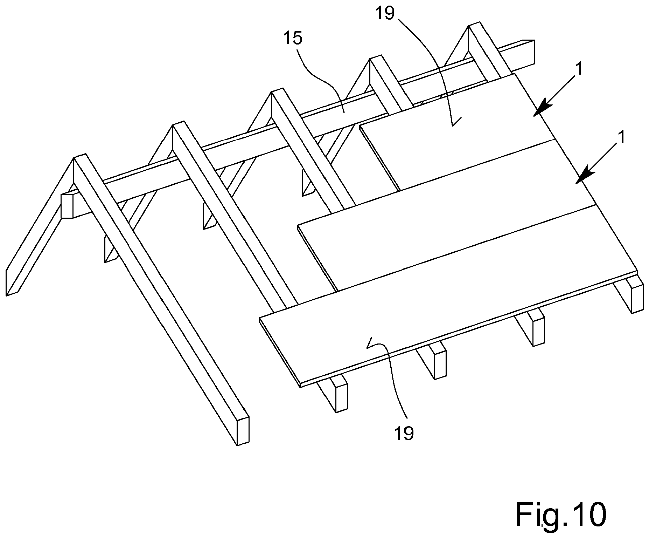

Die Fig. 10 verdeutlicht, dass die Unterdachbahn 1 als Unterspannbahn verwendet wird. In weiteren, nicht dargestellten Verwendungszwecken ist vorgesehen, dass die Unterdachbahn als Wandabdeckung und/oder Unterdeckbahn und/oder als Fassadenabdeckung verwendet wird. Dabei ist in dem dargestellten Ausführungsbeispiel gemäß Fig. 10 vorgesehen, dass die Oberseite 19 der Oberschicht 2 der Bewitterungsseite zugewandt ist.

Die Ausführungsvarianten gemäß Fig. 3 bis 5 verdeutlichen, dass unterschiedlichste Unterdachbahnen 1 mit verschiedenen Oberschichten 2 hergestellt werden können, wobei insbesondere stets derselbe Schichtaufbau 3 zur Gewährleistung der Nageldichtigkeit verwendet werden kann.

Die in Fig. 4 gezeigte Unterdachbahn 1 weist eine außenseitig und innenseitig eine weitere Schicht 12 der Oberschicht 2 auf, die insbesondere gemäß Fig. 5 als außenseitige Vliesschicht 16 und als innenseitige Vliesschicht 17 ausgeführt sein können. Zwischen den weiteren Schichten 12 der Oberschicht 2 ist eine mikroporöse Membranschicht 11 auf Basis eines polyolefinischen Kunststoffes angeordnet. Zwischen den weiteren Schichten 12 der Oberschicht 2 ist neben der ersten Membranschicht 11 eine weitere Membranschicht 11 vorgesehen. Die beiden Membranschichten 11 sind voneinander durch eine Trennlage 13 getrennt. Hinzuweisen ist darauf, dass die weiteren Schichten 12 der Oberschicht 2, die insbesondere als außenseitige Vliesschicht 16 als auch als innenseitige Vliesschicht 17 gemäß Fig. 5 ausgeführt sein können, jeweils als solche nicht einschichtig ausgebildet sein müssen. Die weiteren Schichten 12 der Oberschicht 2, insbesondere die außenseitige Vliesschicht 16 und/oder die innenseitige Vliesschicht 17 gemäß Fig. 5, können jeweils grundsätzlich auch mehrschichtig ausgebildet sein. Zwischen der innenseitigen Vliesschicht 17 und der außenseitigen Vliesschicht 16 ist eine mikroporöse Membranschicht 11 auf Basis eines polyolefinischen Kunststoffes angeordnet. Zwischen der außenseitigen Vliesschicht 16 und der innenseitigen Vliesschicht 17 ist neben der ersten Membranschicht 11 eine weitere Membranschicht 11 vorgesehen. Die beiden Membranschichten 11 sind untereinander durch eine Trennlage 13 getrennt.

Hinzuweisen ist darauf, dass sowohl die außenseitige Vliesschicht 16 als auch die innenseitige Vliesschicht 17 jeweils als solche nicht einschichtig ausgebildet sein müssen. Die außenseitige Vliesschicht 16 und/oder die innenseitige Vliesschicht 17 können jeweils grundsätzlich auch mehrschichtig ausgebildet sein. In dem Ausführungsbeispiel gemäß Fig. 4 und 5 wird von einer einschichtigen Ausbildung der Vliesschichten 16, 17 bzw. der weiteren Schichten 12 ausgegangen. Die Oberseite 19 der Oberschicht 2 ist der Bewitterungsseite gemäß Fig. 5 zugewandt und die Innenseite bzw. Unterseite 9 der Oberschicht 2 ist der Dichtschicht 7 zugewandt. Die mikroporöse Membranschicht 11 weist mikroskopisch kleine Löcher / Öffnungen auf, die so ausgestaltet sind, dass Wasserdampfmoleküle durch sie hindurch diffundieren können, die jedoch so klein sind, dass Wasser im flüssigen Aggregatzustand nicht durch sie hindurchgelangen können. Eine mikroporöse Membranschicht 11 ist demgemäß diffusionsoffen, wasserdicht und wasserdampfdurchlässig. Die der außenseitigen Vliesschicht 16 zugewandte Membranschicht 11 schützt die der innenseitigen Vliesschicht 17 zugewandte Membranschicht 11 vor den schädlichen Umwelteinflüssen der Bewitterung, beispielsweise Temperatureinflüssen, UV-Strahlung, Feuchtigkeit und/oder Staub. Die schädlichen Umwelteinflüsse können sich beschleunigend auf den Alterungsprozess der Membranschicht 11 auswirken. Die Fig. 5 zeigt in einem weiteren Ausführungsbeispiel der Oberschicht 2, dass eine Mehrzahl von Membranschichten 11 zwischen der außenseitigen Vliesschicht 16 und der innenseitigen Vliesschicht 17 vorhanden sind. Die Membranschichten 11 sind jeweils untereinander mittels Trennlagen 13 getrennt und/oder entkoppelt.

Im Übrigen ist in dem dargestellten Ausführungsbeispiel vorgesehen, dass die mikroporöse Membranschicht 11 als polyolefinischer Kunststoff Polypropylen (PP) ausgeführt ist. In einem weiteren, nicht dargestellten Ausführungsbeispiel ist vorgesehen, dass Polyethylen (PE) als Material für die mikroporöse Membranschicht 11 verwendet wird.

Gemäß dem Ausführungsbeispiel der Fig. 4 ist vorgesehen, dass die Membranschicht 11 eine Dicke von zumindest im Wesentlichen 100 µm +/- 10 % aufweist. In weiteren, nicht dargestellten Ausführungsvarianten weist die Membranschicht 11 eine Dicke im Bereich von 20 bis 200 µm, bevorzugt zwischen 30 und 120 µm, weiter bevorzugt zwischen 35 und 100 µm, auf. Das Flächengewicht der Membranschicht 11 beträgt zwischen 15 und 150 g/m², bevorzugt zwischen 20 und 100 g/m², weiter bevorzugt zwischen 20 und 50 g/m².

In einem nicht dargestellten Ausführungsbeispiel ist vorgesehen, dass die Dicke der Membranschicht 11, die der innenseitigen Vliesschicht 17 zugewandt ist, zweifach so groß wie die Dicke der der außenseitigen Vliesschicht 16 zugewandten Membranschicht 11 ausgeführt ist. Bei weiteren, nicht dargestellten Ausführungsvarianten ist die Dicke der der innenseitigen Vliesschicht 17 zugewandten Membranschicht 11 zwischen 50 % bis 200 %, bevorzugt bis 70 %, weiter bevorzugt weiter bis 85 % und insbesondere zumindest im Wesentlichen bis zu 100 % größer, als die Dicke der der außenseitigen Vliesschicht 16 zugewandten Membranschicht 11 ausgeführt. Dabei versteht es sich letztlich, dass in weiteren, nicht dargestellten Ausführungsformen vorgesehen ist, dass die Dicke der der innenseitigen Vliesschicht 17 zugewandten Membranschicht 11 größer als die der außenseitigen Vliesschicht 16 zugewandten Membranschicht 11 ist.

Des Weiteren stellt die Fig. 4 dar, dass die Dicke der der außenseitigen Vliesschicht 16 zugewandten Membranschicht 11 größer als die Dicke der der innenseitigen Vliesschicht 17 zugewandten Membranschicht 11 ist. In weiteren, nicht dargestellten Ausführungsformen ist vorgesehen, dass die Dicke der der außenseitigen Vliesschicht 16 zugewandten Membranschicht 11 größer, bevorzugt zwischen 50 % bis 200 %, weiter bevorzugt bis 70 %, weiter bevorzugt weiter bis 85 % und insbesondere zumindest im Wesentlichen bis zu 100 %, als die Dicke der der innenseitigen Vliesschicht 17 zugewandten Membranschicht 11 ist.

Im Übrigen ist es bei den Ausführungsbeispielen gemäß den Fig. 3 und 4 so, dass die Flächengewichte der außenseitigen Vliesschicht 16 und der innenseitigen Vliesschicht 17 sich unterscheiden. In dem dargestellten Ausführungsbeispiel gemäß Fig. 3 und 4 ist vorgesehen, dass die außenseitige Vliesschicht 16 ein Flächengewicht von zumindest im Wesentlichen 70 g/m² +/- 10 % aufweist. In weiteren Ausführungsformen, die an dieser Stelle nicht dargestellt sind, ist vorgesehen, dass die außenseitige Vliesschicht 16 ein Flächengewicht zwischen 20 bis 200 g/m², bevorzugt zwischen 30 bis 140 g/m², weiter bevorzugt zwischen 40 bis 100 g/m², weiter bevorzugt weiter zwischen 50 bis 80 g/m², aufweist. In den dargestellten Ausführungsbeispielen gemäß Fig. 3 und 4 weist die innenseitige Vliesschicht 17 ein geringeres Flächengewicht als die außenseitige Vliesschicht 16 auf. Das Flächengewicht der innenseitigen Vliesschicht 17 beträgt in dem dargestellten Ausführungsbeispiel zumindest im Wesentlichen 20 g/m² +/- 10 %. In weiteren Ausführungsformen ist vorgesehen, dass die innenseitige Vliesschicht 17 ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², aufweist.

In den dargestellten Ausführungsbeispielen gemäß Fig. 3 und 4 weist die Trennlage 13 die gleiche Dicke wie die innenseitige Vliesschicht 17 auf. Darüber hinaus weist die Trennlage 13 ein ähnliches Flächengewicht wie die innenseitige Vliesschicht 17 auf. Das Flächengewicht der Trennlage 13 beträgt in dem dargestellten Ausführungsbeispiel zumindest im Wesentlichen 20 g/m² +/- 10 %. In weiteren Ausgestaltungsvarianten der Oberschicht 2 vorgesehen, dass die Trennlage 13 ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², aufweist. In den dargestellten Ausführungsformen ist die Trennlage 13 als Vliesschicht 16, 17 ausgebildet.

Im Übrigen ist die Oberschicht 2 gemäß Fig. 3 und 4 selektiv permeabel ausgebildet, so dass sie in dem dargestellten Ausführungsbeispiel sowohl wasserdicht als auch wasserdampfdurchlässig ist. Die Oberschicht 2 weist bevorzugt eine Wasserdichtigkeit bei einer Wassersäule zwischen 0,8 bis 40 m auf. In dem dargestellten Ausführungsbeispiel weist sie eine Wasserdichtigkeit bei einer Wassersäule von zumindest im Wesentlichen 15 m +/- 10 % auf. In weiteren Ausführungsformen ist weiter bevorzugt vorgesehen, dass die Oberschicht 2 eine Wasserdichtigkeit aufweist, die einer Wassersäule zwischen 0,9 bis 30 m, weiter bevorzugt weiter zwischen 1 bis 20 m, standhält. Die Oberschicht 2 weist in den dargestellten Ausführungsformen jedoch nicht nur eine Wasserdichtigkeit auf, sondern auch eine Wasserdampfdurchlässigkeit, die anhand der wasserdampfdiffusionsäquivalenten Luftschutzdicke charakterisiert wird. In dem dargestellten Ausführungsbeispiel ist die wasserdampfdiffusionsäquivalente Luftschutzdicke (s_{d}-Wert) etwa 5 cm. In weiteren Ausführungsformen kann vorgesehen sein, dass der s_{d}-Wert zwischen 0,01 bis 1 m, bevorzugt zwischen 0,02 bis 0,5 m, weiter bevorzugt zwischen 0,03 bis 0,3 m, variiert.

Sowohl die Vliesschicht 16, 17 als auch die Trennlage 13 weisen in der dargestellten Ausführungsform einen thermoplastischen Kunststoff auf. Als thermoplastischer Kunststoff ist Polyester (PS) vorgesehen. In weiteren Ausführungsformen ist auch die Verwendung von Polyethylen (PE), Polypropylen (PP) und/oder Polyethylenterephthalat (PET) vorgesehen. Dabei versteht es sich letztlich, dass die Vliesschicht 16, 17 und/oder die Trennlage 13 auch aus dem thermoplastischen Kunststoff bestehen kann.

### Bezugszeichenliste:

- 1: Unterdachbahn
- 2: Oberschicht
- 3: Schichtaufbau
- 4: Lagen der Oberschicht
- 5: Lagen des Schichtaufbaus
- 6: Schutzschicht des Schichtaufbaus
- 7: Dichtschicht
- 8: Klebebereich
- 9: Unterseite der Oberschicht
- 10: Befestigungsmittel
- 11: Membranschicht
- 12: weitere Schicht Oberschicht
- 13: Trennlage
- 14: Holzstück
- 15: Dach
- 16: außenseitige Vliesschicht
- 17: innenseitige Vliesschicht
- 18: Abdichtung
- 19: Oberseite Oberschicht

## Patentansprüche

1. Verfahren zur Herstellung einer nageldichten Unterdachbahn (1), wobei die Unterdachbahn (1) eine wenigstens einlagige, insbesondere der Bewitterungsseite zugewandte, Oberschicht (2) und einen nageldichten, wenigstens zweilagigen Schichtaufbau (3) aufweist,
**dadurch gekennzeichnet,**
**dass** die Oberschicht (2) räumlich und zeitlich getrennt von dem nageldichten Schichtaufbau (3) hergestellt wird, dass die Oberschicht (2) mit dem wenigstens zweilagigen Schichtaufbau (3), insbesondere fest und/oder stoffschlüssig, verbunden wird und dass der Schichtaufbau (3) vor der Herstellung der Unterdachbahn (1), insbesondere in Rollenform, zwischengelagert wird.

2. Verfahren nach Anspruch 1, **dadurch gekennzeichnet, dass** bei einer Mehrzahl von Lagen (4) der Oberschicht (2) diese mittels Extrusionsbeschichtung und/oder Dispersionsbeschichtung und/oder Wärmekalandrieren und/oder Kleben und/oder Ultraschallschweißen verbunden werden.

3. Verfahren nach Anspruch 1 oder 2, **dadurch gekennzeichnet, dass** zur Verbindung der Oberschicht (2) mit dem nageldichten Schichtaufbau (3) Wärmekalandrieren und/oder Kleben und/oder Ultraschallschweißen verwendet wird, wobei insbesondere ein anderes Verfahren verwendet wird als zur Herstellung der Oberschicht (2) und/oder des Schichtaufbaus (3).

4. Verfahren nach einem der vorhergehenden Ansprüche, **dadurch gekennzeichnet, dass** die Lagen (5) des Schichtaufbaus (3) mittels Kalt- oder Heißnadelperforation perforiert werden.

5. Verfahren nach einem der vorhergehenden Ansprüche, **dadurch gekennzeichnet, dass** eine als Schutzschicht (6) ausgebildete Lage des Schichtaufbaus (5) thermisch kalandriert und/oder chemisch verfestigt und/oder wasserstrahl-und/oder nadelverfestigt wird und/oder dass eine als Dichtschicht (7) ausgebildete Lage des Schichtaufbaus (5) mittels einer Schaumextrusion hergestellt wird und/oder aufgeschäumt wird und/oder dass zur Verbindung der Lagen (5) des Schichtaufbaus (6) eine Klebeverbindung verwendet wird.

## Claims

1. Method for producing a nailproof roofing underlay (1), wherein the roofing underlay (1) has an upper layer (2), which is at least single-layered and in particular faces the weathering side, and has a nailproof, at least two-layered layer structure (3),
**characterized in that,**
the upper layer (2) is produced spatially and temporally separate from the nailproof layer structure (3), that the upper layer (2) is connected to the at least two-layer layer structure (3), in particular in a solid and/or materially bonded manner, and **in that** the layer structure (3) is temporarily stored, in particular in roll form, before the production of the roofing underlay (1).

2. Method according to claim 1, **characterized in that** a plurality of layers (4) of the upper layer (2) are joined by means of extrusion coating and/or dispersion coating and/or heat calendering and/or gluing and/or ultrasonic welding.

3. Method according to claim 1 or 2, **characterized in that** heat calendering and/or adhesive bonding and/or ultrasonic welding is used to join the upper layer (2) to the nailproof layer structure (3), wherein in particular a different method is used than for producing the upper layer (2) and/or the layer structure (3).

4. Method according to any one of the preceding claims, **characterized in that** the layers (5) of the layer structure (3) are perforated by means of cold or hot needle perforation.

5. Method according to any one of the preceding claims, **characterized in that** a layer of the layer structure (5) formed as a protective layer (6) is thermally calendered and/or chemically consolidated and/or hydro-blast and/or needle consolidated and/or that a layer of the layer structure (5) formed as a sealing layer (7) is produced and/or foamed by means of a foam extrusion and/or that an adhesive bond is used to connect the layers (5) of the layer structure (6).

## Revendications

1. Procédé de production d'une membrane de sous-toiture étanche à la perforation des clous (1), ladite membrane de sous-toiture (1) présentant une couche supérieure constituée d'au moins une couche, en particulier tournée côté intempéries (2) et une structure d'au moins deux couches étanche à la perforation des clous (3),
**caractérisé en ce que**
**que** la couche supérieure (2) est produite séparée dans l'espace et dans le temps de la structure de couches étanche à la perforation des clous (3), **en ce que** la couche supérieure (2) est reliée à la structure d'au moins deux couches (3), en particulier de manière solidaire et/ou par assemblage permanent, et **en ce que** la structure de couches (3) est temporairement stockée avant la fabrication de la membrane de sous-toiture (1), en particulier sous forme de rouleau.

2. Procédé selon la revendication 1, **caractérisé en ce que**, dans le cas d'une pluralité de couches (4) de la couche supérieure (2), celles-ci sont reliées au moyen d'un revêtement extrudé et/ou d'un revêtement dispersé et/ou d'un calandrage à chaud et/ou d'un collage et/ou d'un soudage par ultrasons.

3. Procédé selon la revendication 1 ou 2, **caractérisé en ce que** le calandrage à chaud et/ou le collage et/ou le soudage par ultrasons sont utilisés pour relier la couche supérieure (2) à la structure de couches étanche à la perforation des clous (3), en particulier un procédé différent de celui de la production de la couche supérieure (2) et/ou de la structure de couches (3) étant utilisé.

4. Procédé selon l'une quelconque des revendications précédentes, **caractérisé en ce que** les couches (5) de la structure de couches (3) sont perforées à froid ou à chaud au moyen d'une aiguille.

5. Procédé selon l'une quelconque des revendications précédentes, **caractérisé en ce qu'**une couche de la structure de couches (5) conçue comme une couche de protection (6) est calandrée thermiquement et/ou consolidée chimiquement et/ou durcie au jet d'eau et/ou à l'aiguille et/ou **en ce qu'**une couche conçue comme une couche d'étanchéité (7) de la structure de couches (5) est produite au moyen d'une extrusion de mousse et/ou expansée et/ou **en ce qu'**une liaison adhésive est utilisée pour relier les couches (5) de la structure de couches (6).
